# EUROPEAN PATENT APPLICATION

(11) **EP 3 618 012 A1**
(43) Date of publication of application: **04.03.2020**
(21) Application number: 19194417.2
(22) Date of filing: 29.08.2019
(51) Int. Cl.: G07C 5/00, G07C 5/08

(54) **DATA COLLECTION APPARATUS, DATA COLLECTION SYSTEM, DATA COLLECTION METHOD, AND ON-VEHICLE DEVICE**

(30) Priority: 31.08.2018 JP 2018163946; 31.08.2018 JP 2018163947; 14.09.2018 JP 2018172759; 02.11.2018 JP 2018207593; 02.11.2018 JP 2018207595
(71) Applicant: DENSO TEN LIMITED, Kobe-shi, Hyogo 6528510 (JP)
(72) Inventor: TSUYUNASHI, Masashi, Hyogo, 652-8510 (JP); MATSUO, Tomohiro, Hyogo, 652-8510 (JP); HAMAOKA, Tatsuya, Hyogo, 652-8510 (JP); HIRASHIMA, Yoshitaka, Hyogo, 652-8510 (JP); SODA, Tomofumi, Hyogo, 652-8510 (JP)
(74) Representative: Haseltine Lake Kempner LLP

(57) **Abstract**

A data collection apparatus (1A) includes a receiver (32A), an instruction data transmitter (34A), a collector (31A), and a provider (35A). The receiver (32A) receives a user data collection request. The instruction data transmitter (34A) transmits a collection request based on the user data collection request to an on-vehicle device (50). The collector (31A) collects tag information of vehicle state data acquired by the on-vehicle device (50). The provider (35A) provides selection tag information for selecting data by a user based on the tag information collected by the collector (31A). The instruction data transmitter (34A) transmits a transmission instruction based on a user data transmission to the on-vehicle device (50). The collector (31A) collects the vehicle state data corresponding to the transmission instruction transmitted from the on-vehicle device (50). The provider (35A) provides user vehicle state data for using data by the user based on the vehicle state data collected by the collector (31A).

## Description

### CROSS-REFERENCE TO RELATED APPLICATION

### FIELD

The embodiments discussed herein are directed to a data collection apparatus, a data collection system, a data collection method, and an on-vehicle device.

### BACKGROUND

Conventionally developed are data collection apparatuses that collect road information from on-vehicle device mounted on respective vehicles. The data collection apparatuses select a vehicle from which the road information is to be collected based on positional information on the vehicles, thereby collecting the road information on a desired position (refer to Japanese Laid-open Patent Publication No. 2018-55581, for example).

The data collection apparatuses have recently been needed to quickly collect various kinds of data besides the road information from the on-vehicle device. If the conventional data collection apparatuses collect various kinds of data from the on-vehicle device, however, the communication traffic increases in data communications, resulting in congested communication lines. As a result, it may possibly take a long time to provide the data.

Accordingly, it is an object in one aspect of an embodiment of the invention to provide a data collection apparatus, a data collection system, a data collection method, and an on-vehicle device that can quickly collect data.

### SUMMARY

A data collection apparatus comprising: a receiver that receives a user data collection request from a user terminal; an instruction data transmitter that transmits a collection request based on the user data collection request to an on-vehicle device; a collector that collects tag information of vehicle state data acquired by a vehicle from the on-vehicle device mounted on the vehicle; and a provider that provides selection tag information for selecting data by a user to the user terminal based on the tag information collected by the collector, wherein the instruction data transmitter transmits a transmission instruction based on a user data transmission instruction received from the user terminal to the on-vehicle device, the collector collects the vehicle state data corresponding to the transmission instruction transmitted from the on-vehicle device, and the provider provides user vehicle state data for using data by the user to the user terminal based on the vehicle state data collected by the collector.

An aspect of the embodiments can quickly collect data.

### BRIEF DESCRIPTION OF DRAWINGS

The present invention can be recognized more completely, and its advantageous effects can be easily understood by reading the description of embodiments below with reference to the accompanying drawings.
FIGS. 1A to 1C are diagrams for explaining operations of a data collection system;
FIG. 2A is a diagram of an example of tag data;
FIG. 2B is a diagram of an example of collection condition ID;
FIG. 2C is a data transition diagram in the data collection system;
FIG. 3 is a diagram for explaining a conventional technique;
FIG. 4 is a diagram of an example of data collection by a data collection apparatus;
FIG. 5 is a diagram of an outline of a data collection method according to a first embodiment;
FIG. 6 is a system schematic diagram of the data collection system;
FIG. 7 is a block diagram of the data collection apparatus;
FIG. 8 is a diagram of an example of a vehicle information table;
FIG. 9 is a diagram of an example of a collection condition table;
FIGS. 10A and 10B are diagrams of examples a reception screen;
FIG. 11 is a block diagram of an on-vehicle device;
FIG. 12 is a diagram of an example of a collection condition file;
FIG. 13 is a flowchart of a procedure performed by the data collection apparatus;
FIG. 14 is a flowchart of a procedure performed by the on-vehicle device;
FIGS. 15A to 15C are diagrams for explaining an outline of the data collection method according to a second embodiment;
FIG. 16 is block diagram of a configuration example of the data collection system;
FIGS. 17A and 17B are diagrams of a specific example of setting information;
FIG. 18 is a flowchart of a procedure performed by the data collection system;
FIGS. 19A and 19B are diagrams for explaining an outline of the data collection method according to a third embodiment;
FIGS. 20A and 20B are block diagrams of a configuration example of the data collection system;
FIG. 21 is a diagram of a modification where a communication environment of a specific area is unfavorable;
FIG. 22 is a diagram of an example of history information of the on-vehicle device.
FIG. 23 is a diagram of an example of selection of a transfer destination;
FIG. 24 is a diagram of a modification where a processing instruction is added to an upload request;
FIG. 25 is a diagram of an example of history information of a data storage device;
FIG. 26 is a diagram of a processing sequence performed by the data collection system;
FIG. 27 is a diagram of an outline of the data collection method according to a fourth embodiment;
FIG. 28 is a system schematic diagram of the data collection system;
FIG. 29 is a block diagram of the data collection apparatus;
FIG. 30 is a diagram of an example of a score table;
FIG. 31 is a flowchart of a procedure performed by the data collection apparatus;
FIG. 32 is a flowchart of a procedure performed by the on-vehicle device; and
FIG. 33 is a diagram of an example of transfer of a determination right.

### DESCRIPTION OF EMBODIMENTS

Preferred embodiments of a data collection apparatus, a data collection system, a data collection method, and an on-vehicle device according to the present disclosure will be explained in greater detail with reference to accompanying drawings. The embodiments are not intended to limit the present invention.

### Basic concept

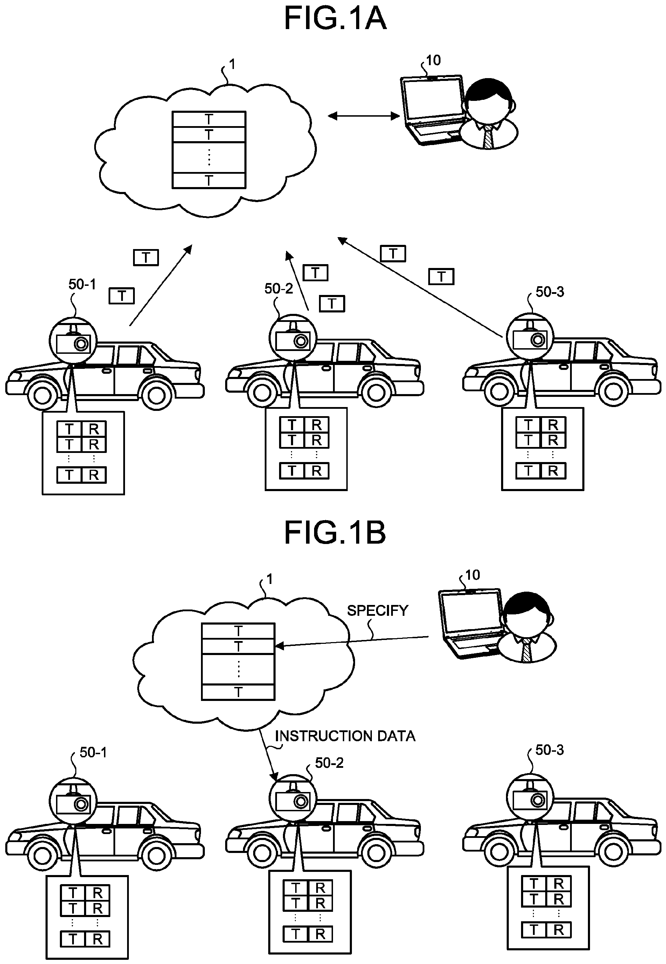

An outline of basic operations of a data collection technique is described first with reference to the accompanying drawing of FIGS. 1A to 4. The following describes a series of processing performed by a data collection system to provide data to a data user with reference to FIGS. 1A to 1C.

FIGS. 1A to 1C are diagrams for explaining operations of the data collection system. As illustrated in FIG. 1A, the data collection system includes a user terminal 10, a data collection apparatus (server) 1, and on-vehicle device 50-1, 50-2, 50-3, ... (when the on-vehicle device are indicated as a whole, they are referred to as on-vehicle device 50). The user terminal 10 is used by a data user, such as a developer of an autonomous car. The data collection apparatus 1 is formed by cloud, for example. The on-vehicle device 50 are mounted on respective vehicles. To effectively share and use the hardware configuration, the on-vehicle device 50 preferably also serves as a drive recorder including a camera, an image storage unit (memory), various sensors, such as an acceleration sensor and a global positioning system (GPS) sensor, and a microcomputer, for example.

The data user sets a data collection condition (user data collection request) using the user terminal 10 connected to the data collection apparatus 1. The data collection apparatus 1 creates tag data generation data for generating tag data having index-data properties. The tag data is associated with real data to be collected and is used to search for the data and grasp the outline of the data.

The tag data generation data is generated based on an operation performed by the data user using a computer program and generation data stored in the user terminal 10 or the data collection apparatus 1. The data collection condition and the tag data generation data are stored in the data collection apparatus 1. The data collection condition and the tag data generation data are transmitted to data collection object vehicles (vehicle condition of which is specified by the data user) and also stored in the on-vehicle device 50.

Subsequently, the on-vehicle device 50 each monitor output data from the sensors and the camera. If an event that satisfies the stored data collection condition occurs, the on-vehicle device 50 each store real data R in a storage device. The on-vehicle device 50 each generate and store therein tag data T corresponding to the real data R (vehicle state data) based on the real data R and the stored tag data generation data.

The on-vehicle device 50 transmit the tag data T to the data collection apparatus 1, and the data collection apparatus 1 stores therein the tag data T. The real data R is not transmitted to the data collection apparatus 1.

If the data user uses and connects the user terminal 10 to the data collection apparatus 1 to check a data collection state and collect the real data R, information (selection tag information) based on the tag data T collected from the data collection apparatus 1 is displayed on the user terminal 10. The user terminal 10 displays an operating screen for performing a data collection instruction operation based on the tag data T.

If the data user uses the user terminal 10 to perform an operation of specifying the real data R to be collected, instruction data (user data transmission instruction) for specifying the object real data R is transmitted to the object on-vehicle device 50 via the data collection apparatus 1.

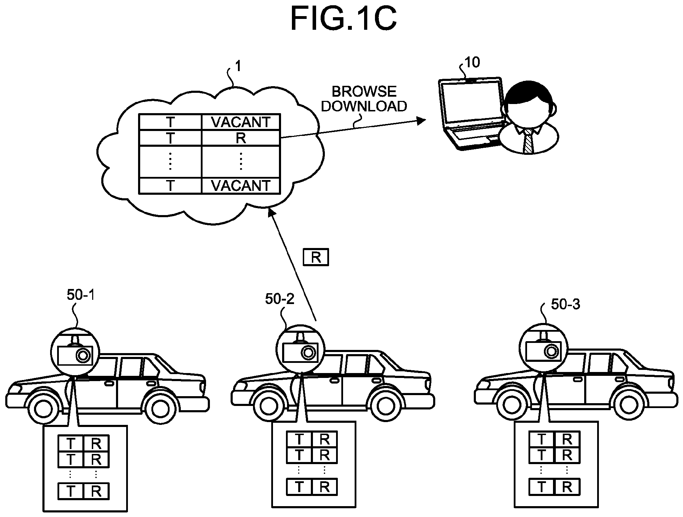

Subsequently, as illustrated in FIG. 1C, the real data R (e.g., image data) specified by the collection instruction is transmitted from the on-vehicle device 50 to the data collection apparatus 1 and stored in the data collection apparatus 1. The data user uses the user terminal 10 to access the real data R stored in the data collection apparatus 1. The data user thus browses and downloads user vehicle state data, for example.

From the perspective of the data capacity of the on-vehicle device 50, the real data R transmitted to the data collection apparatus 1 and the corresponding tag data T are preferably deleted from the on-vehicle device 50. The tag data T is preferably not data obtained by simply extracting part of the acquired data but tag data serving as metadata that enables the data user to grasp the outline of the real data R and determine whether the real data R is needed.

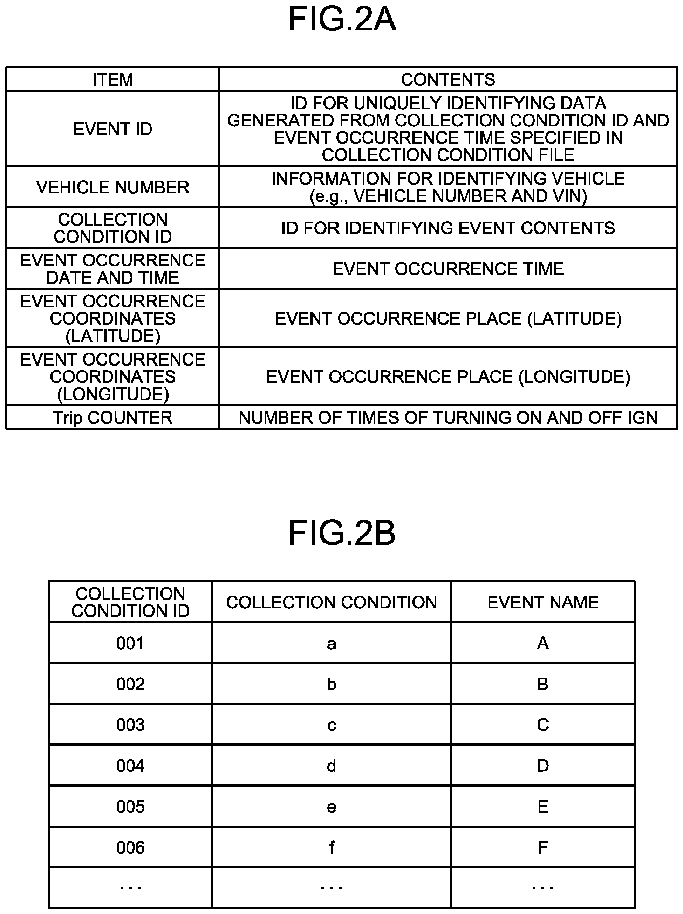

The following describes a specific example of the tag data T with reference to FIGS. 2A and 2B. FIG. 2A is a diagram of an example of the tag data T. FIG. 2B is a diagram of an example of collection condition ID. In the example illustrated in FIG. 2A, the tag data T includes event ID, vehicle number, collection condition ID, event occurrence date and time, event occurrence coordinates (latitude and longitude), and Trip counter.

The event ID is an identification code for uniquely identifying data and is generated from the collection condition ID and event occurrence time specified in a collection condition file. If the collection condition ID is 001, and the occurrence order is the first, for example, the event ID is defined as "0010001". The vehicle number is an identification number of a vehicle. The event occurrence date and time is data on the date and time when the event (state where the data collection condition is satisfied) occurs. The event occurrence coordinates (latitude and longitude) are data on the position where the event occurs. The Trip counter is the number of times of turning on and off an ignition switch (number of times of turning on and off an engine from a predetermined time point, such as a data collection start time point).

The collection condition ID is data for identifying the data collection condition set in the on-vehicle device 50 and associated with collection condition data (file) illustrated in FIG. 2B. If a plurality of data users desire to collect data or if one data user desires to collect data based on a plurality of different conditions, a plurality of data collection conditions are set in each of the on-vehicle device 50.

Each of the on-vehicle device 50 and the data collection apparatus 1 store therein the same collection condition data. An on-vehicle device 50 not specified as a collection object based on a certain condition does not store the data on the collection condition in the collection condition file stored in the on-vehicle device 50.

A simple data structure of the collection condition data (file) preferably includes the collection condition ID data for identifying the collection condition and the collection condition data indicating the collection condition contents. To facilitate the data user's recognition on the screen display, an event name (used for display) is preferably associated with the collection condition ID data and the collection condition data.

While the tag data T is the ID indicating the collection condition and the name in the example illustrated in FIG. 2B, the tag data T may be level data indicating the data type of the real data R resulting from classification of the level. Furthermore, the tag data T may be information resulting from classification of the real data R based on a collection condition achievement level as additional data of the data collection condition, such as the degree of danger based on an inter-vehicle distance from a preceding vehicle before cutting-in occurs when a cutting-in vehicle is detected (long inter-vehicle distance: danger of cutting-in is small, medium inter-vehicle distance: danger of cutting-in is medium, and short inter-vehicle distance: danger of cutting-in is large), for example.

If the system described above is formed by cloud, the on-vehicle device 50 each tag the information, such as time, position, and speed, to the collected data. The on-vehicle devices 50 each upload only the tag data T as meta-information to the cloud and store therein the data body, such as an image. If the data user, such as a service developer, desires to acquire needed data from the on-vehicle device 50, the data user identifies the object vehicle by referring to the metadata collected in the cloud. The system extracts the image recorded in the vehicle, thereby collecting the real data R.

With this configuration, the system need not store the image data having a large data amount in the cloud. Consequently, the system manages and refers to only the tag data T having a small data amount, thereby collecting only needed real data R.

To develop automatic driving, for example, developers need the real data R on dangerous cutting-in scenes. In collection of the data, various kinds of cutting-in are assumed to occur because of momentarily changing road environment. The data collection system according to the embodiment manages the data by the tagging function. Consequently, the data collection system facilitates the developers' finding only the dangerous cutting-in scenes.

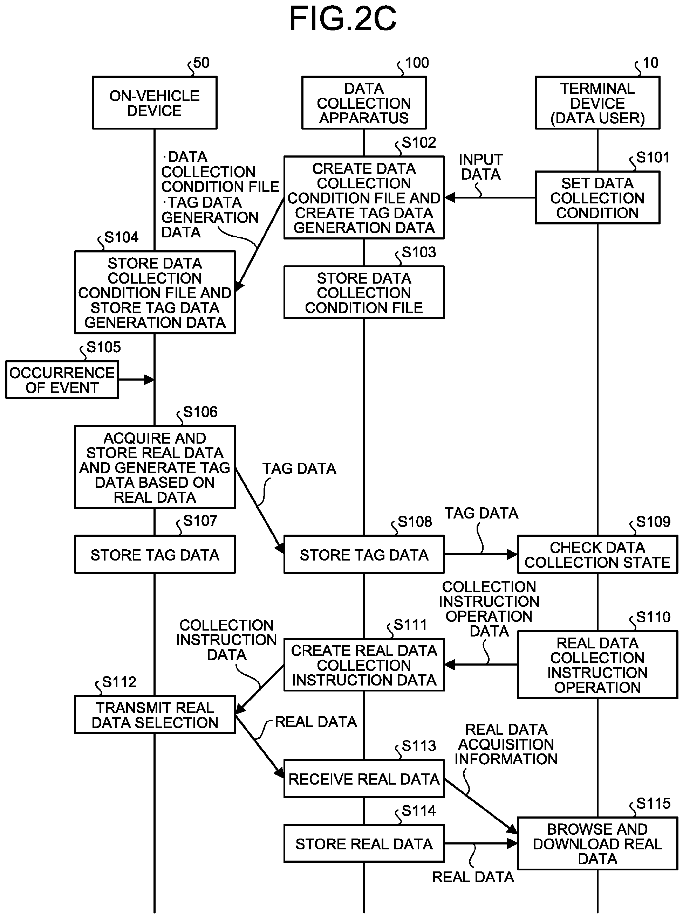

The following describes the processing by the devices (the on-vehicle device 50, the data collection apparatus, and the terminal device (data user)) of the data collection system and the flow of data with reference to the processing and data transition diagram in FIG. 2C. FIG. 2C is a data transition diagram in the data collection system. While only one on-vehicle device 50 is illustrated, all the on-vehicle devices 50 specified as the data collection objects perform the same operations.

If the data user inputs a data collection condition using the user terminal 10 (Step S101), the input data on the data collection condition is transmitted to the data collection apparatus 1. The data collection apparatus 1 creates a data collection condition file based on the input data on the data collection condition and creates tag data generation data used to generate the tag data T corresponding to real data based on the real data (Step S102) .

The created data collection condition data file and the created tag data generation data are transmitted to the on-vehicle device 50, and the data collection condition data file is stored in the data collection apparatus 1 (Step S103). The on-vehicle device 50 stores therein the data collection condition data file and the tag data generation data transmitted from the data collection apparatus 1 (Step S104).

If an event that matches the data collection condition included in the data collection condition data file occurs (Step S105: determined by output from the sensors of the vehicle), the on-vehicle device 50 acquires and stores therein data to be collected (by referring to the data in the data collection condition data file) from the sensors of the vehicle and generates the tag data T based on the real data (Step S106).

The on-vehicle device 50 stores therein the generated tag data T (Step S107). The generated tag data T is transmitted to the data collection apparatus 1, and the data collection apparatus 1 stores therein the transmitted tag data T (Step S108). The processing in occurrence of the event (processing from Step S105 to Step S108) is performed at any time in response to occurrence of the event.

The tag data T stored in the data collection apparatus 1 is provided to the user terminal 10 by an operation performed by the data user on the user terminal 10. The user terminal 10 displays an operating screen for checking the state of data collection and collecting the real data. As a result, the data user can check the data collection state (Step S109).

If the data user performs a collection instruction operation for collecting needed real data R based on the tag data T (Step S110), collection instruction operation data is transmitted to the data collection apparatus 1, and the data collection apparatus 1 creates collection instruction data including identification data for identifying the real data to be collected based on the collection instruction operation data (Step S111). The collection instruction data is transmitted to the on-vehicle device 50.

The on-vehicle device 50 selects the real data to be collected based on the received collection instruction data and transmits the real data to the data collection apparatus 1 (Step S112).

Subsequently, the data collection apparatus 1 receives the real data R transmitted from the on-vehicle device 50 (Step S113). The data collection apparatus 1 transmits real data acquisition information indicating that it has acquired the real data R to the user terminal 10 and stores therein the received real data R (Step S114). The data user operates the user terminal 10 to access the real data R stored in the data collection apparatus 1 and browses and downloads the real data R (Step S115).

With the process described above, the data user can efficiently collect needed real data. By processing, accumulating, and transmitting data as described above, the data collection system can reduce the load in processing and storing the data in the devices and the load in transmitting the data between the devices.

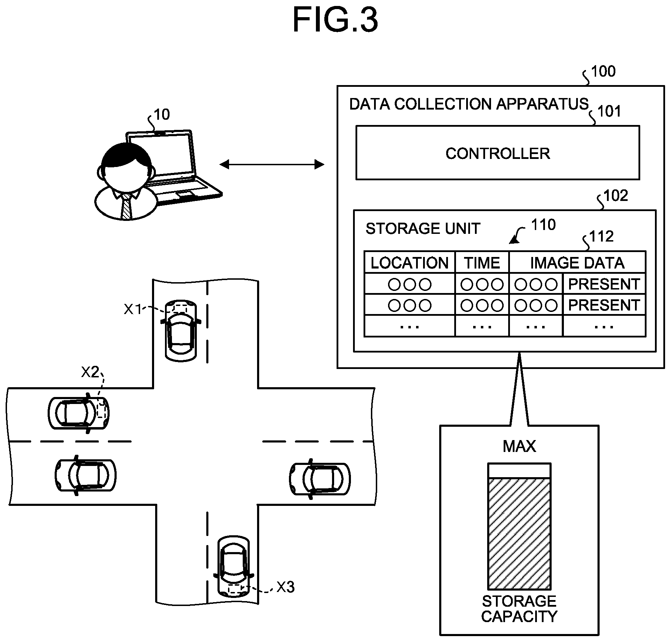

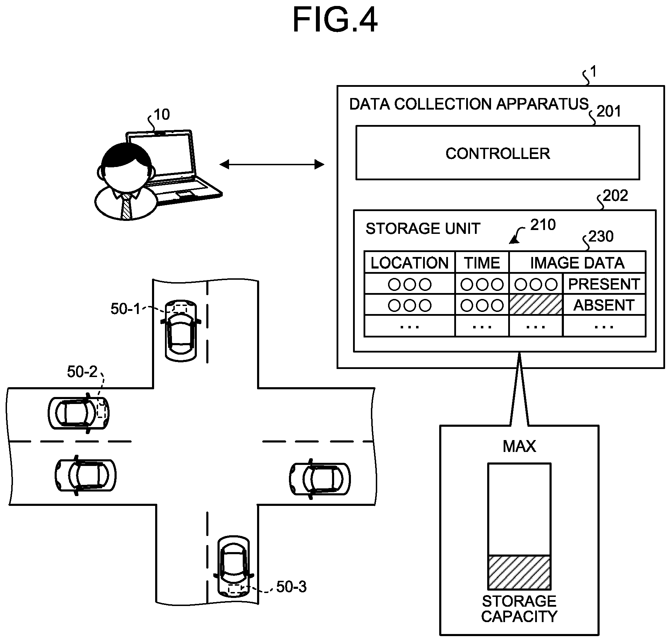

The following describes an example of data collection using map (road) data as an example of a specific data type. To simplify the explanation, the following describes a conventional data collection system first with reference to FIG. 3 and then describes the data collection system according to the present disclosure with reference to FIG. 4.

FIG. 3 is a diagram for explaining the conventional technique. FIG. 4 is a diagram of an example of data collection by the data collection apparatus according to the embodiment.

As illustrated in FIG. 3, in the conventional data collection system, on-vehicle device X1, X2, ... each transmit data, such as position data, time data, and image data, acquired by onboard sensors with needed additional data, such as vehicle identification data, to a data collection apparatus (server) 100. An acquired data type (indicating what kinds of data is to be acquired, such as position, time, image, speed, vibration, and inclination data) and a data acquisition range (road section and period of time) are specified in advance by the user or others via The data collection apparatus 100. The on-vehicle device X1, X2, ... each acquire the specified data from the corresponding sensors.

In the conventional data collection system described above, all the pieces of image data on the specified section in which vehicles travel are transmitted to the data collection apparatus 100, such as cloud. As a result, a road with a large traffic volume, for example, has many pieces of redundant data. Consequently, a larger amount of real data than needed is collected, whereby a large amount of collected data 110 is accumulated in a storage unit 102 of the data collection apparatus 100. Accordingly, the amount of data becomes significantly large, thereby straining the storage capacity of the storage unit 102 of the data collection apparatus 100. In particular, image data 112 having a large data amount not only increases the communication load but also strains the storage capacity of the storage unit 102.

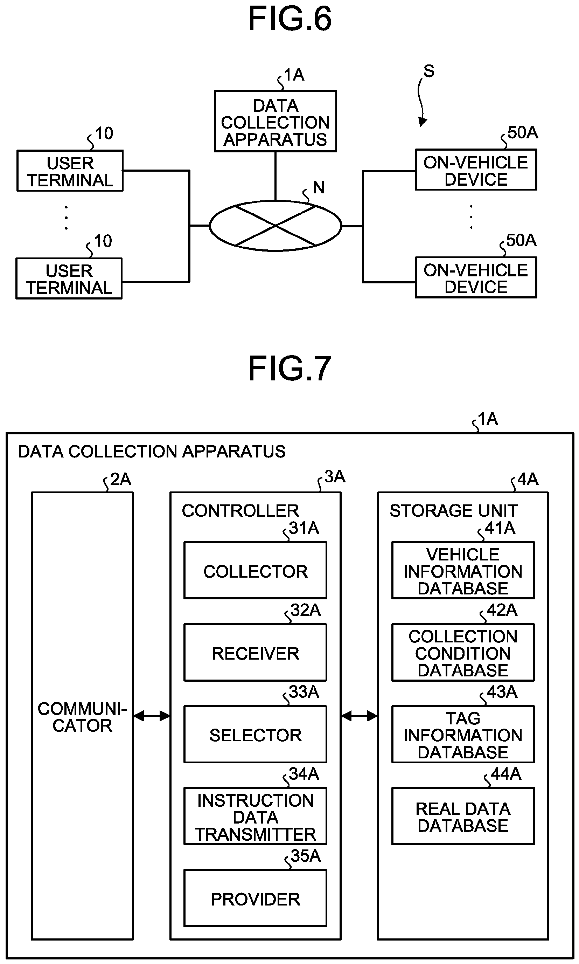

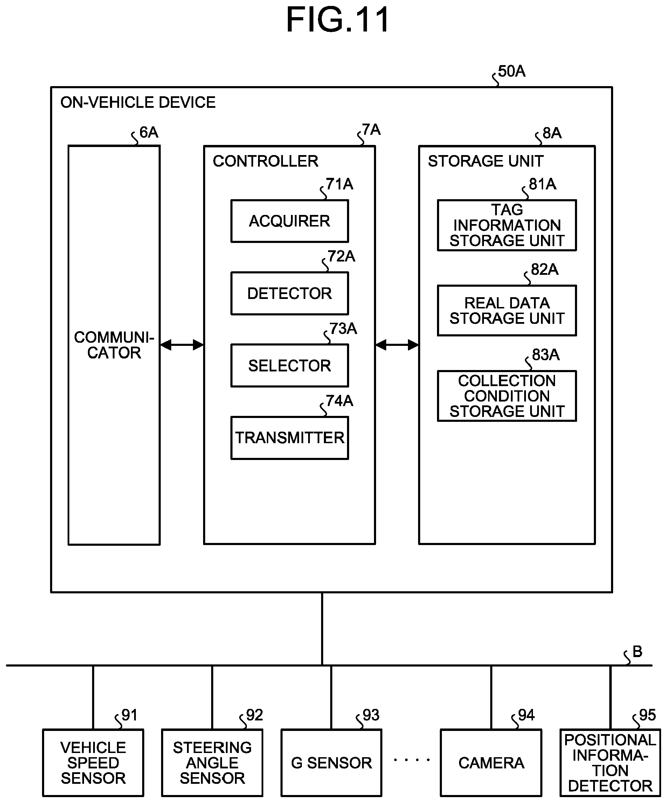

The embodiment illustrated in FIG. 4 addresses the problem described above. A specific configuration example of the data collection apparatus 1 will be described later with reference to FIGS. 7, 16, 20A, 20B, and 29. A specific configuration example of the on-vehicle device 50 will be described later with reference to FIGS. 11, 16, and 20A.

As illustrated in FIG. 4, in the data collection system according to the present embodiment, the on-vehicle device 50-1, 50-2, ... each collect the real data R, such as position data, time data, and image data, from the onboard sensors based on the data collection condition specified by the data collection apparatus 1. The on-vehicle device 50-1, 50-2, ... each generate the tag data T based on the tag data generation condition specified by the data collection apparatus 1.

The generated tag data T and the corresponding real data R are accumulated in the on-vehicle device 50-1, 50-2, ... (on-vehicle device that generate the data). The data collection condition, such as the type of data to be collected by the on-vehicle device 50-1, 50-2, ..., and the tag data generation condition information for generating the tag data are generated by the data collection apparatus 1 based on an operation performed by the data user on the user terminal 10 and stored in a storage unit 202 of the data collection apparatus 1. The tag data generation condition information is transmitted to the on-vehicle device 50-1, 50-2, ... serving as data collection objects and stored in their storage units.

The pieces of tag data T generated by the on-vehicle device 50 are transmitted to and accumulated in the data collection apparatus 1. The real data R is not transmitted from the on-vehicle device 50 to the data collection apparatus 1.

If the data user, such as a service developer, desires to acquire needed data from the on-vehicle device 50, the data user refers to the tag data T collected and accumulated in the data collection apparatus 1 from the user terminal 10 connected to the data collection apparatus 1. The data user thus identifies the object vehicle and performs a data collection instruction operation.

According to the operation, the data collection apparatus 1 identifies the vehicle having the real data R desired to be collected based on the accumulated tag data T. The data collection apparatus 1 transmits an instruction for transmitting the real data to be collected to the on-vehicle device 50-1, 50-2, ... of the vehicle. Consequently, the data collection apparatus 1 extracts the object real data R (e.g., image data 230) accumulated in the on-vehicle device 50-1, 50-2, ..., thereby collecting the data.

The user terminal 10 generates and displays an operating screen by referring to the tag data T and other data in the data collection apparatus 1. The operating screen is a screen for specifying the data collection condition and performing a real data collection specification operation based on the tag data T, for example.

The method for specifying the vehicle from which the real data R is to be collected is not limited to the method of identifying and specifying the vehicle itself described above. Alternatively, the present embodiment may employ a method of specifying a vehicle condition, that is, a method of collecting the real data R of the object vehicle by specifying a condition, such as vehicle model, traveling position (area), traveling time (time period), and vehicle with a specific event occurring, for example.

With the configuration described above, the data collection system according to the present embodiment need not store the image data 230 having a large data amount and other data in the data collection apparatus 1. Consequently, the data collection system can manage and refer to only the tag data T having a small data amount, thereby collecting only needed image data. In other words, the data collection system can reduce the strain on the storage capacity of the storage unit 202 of the data collection apparatus 1.

To develop automatic driving, for example, developers may need the data on dangerous cutting-in scenes. In collection of the data, various kinds of cutting-in occur because of momentarily changing road environment. The data collection system according to the present embodiment manages the data by the tagging function. Consequently, the data collection system can find only the dangerous cutting-in scenes based on the tag data T and collect only the image data on the scenes.

The time when the vehicles travel and their positional information are transmitted to the data collection apparatus 1 as the tag data T, for example. If the developer needs image data on a certain road, the developer refers to the tag data T in the data collection apparatus 1 to identify the vehicle that has passed on the object road. The developer can acquire the image data from the vehicle via the data collection apparatus 1.

It is expected that the number of connected cars that collect and provide data to a center increases in the future and that a huge amount of data is collected from the connected cars. The present embodiment uses the tag data T to efficiently collect only the data that matches the needs of the data user, such as a service developer. Consequently, the present embodiment is applicable to various services.

Because the data amount of the tag data T is small, the present embodiment may store all the pieces of tag data T that match the data collection condition in the data collection apparatus 1. If the road sections specified for data collection are significantly different in traffic volume, the present embodiment may generate, transmit, and accumulate the tag data T intermittently for the road section with a larger traffic volume and delete old data when the collection amount exceeds an appropriate collection amount, for example. Furthermore, the present embodiment may ease the data collection condition for the road section with a significantly small traffic volume and complementarily collect similar data, for example.

In this case, the present embodiment preferably notifies the data user of the difference in traffic volume or displays an operating screen that enables the data user to determine whether to select the object data by displaying information on the difference on the operating screen for issuing the instruction for collecting the real data. In other words, the present embodiment preferably enables the data user to perform an appropriate operation.

The following describes the main point of technical characteristics according to the embodiment described above.

First technical characteristics: the embodiment includes data for identifying a route section on a road as the tag data (includes the data in the data collection condition). Consequently, the embodiment can select data based on the route section.

Second technical characteristics: in the first technical characteristics, the data collection apparatus issues a real data collection instruction such that the amounts (numbers) of collected data of the respective route sections are equivalent to each other. Consequently, the embodiment can collect the real data independently of the difference in traffic volume between the route sections and prevent collection of unnecessary real data due to the difference in the data collection amount between the route sections.

Third technical characteristics: in the first technical characteristics, the data collection apparatus sets the data collection condition such that the amounts (numbers) of collected data of the respective route sections are equivalent to each other. The data collection condition, for example, includes a thinning condition of acquiring data once in X times when the data collection condition is satisfied. Consequently, the embodiment can make the acquisition amount of real data of the on-vehicle device uniform independently of the difference in traffic volume between the route sections, thereby preventing collection of unnecessary real data due to the difference in the data collection amount between the route sections. Furthermore, the embodiment can reduce the load in processing and storing data and the load in transmitting data by the on-vehicle device, for example.

Fourth technical characteristics: the embodiment converts the generated and stored tag data into metadata. Consequently, the embodiment facilitates the data user's grasping the contents of data and selecting the real data to be collected, for example.

Fifth technical characteristics: in the fourth technical characteristics, the embodiment converts data relating to the items of the collection condition into metadata. The collection condition is originally set by the data user. By using the metadata relating to the collection condition, the embodiment further facilitates the data user's grasping the contents of data and selecting the real data to be collected, for example.

Sixth technical characteristics: in the fourth and the fifth technical characteristics, when converting the data relating to a certain item (e.g., the collection condition) into metadata, the embodiment also converts level information on the item into metadata. Consequently, the embodiment enables the data user to perform fine selection based on the level of the item and facilitates the data user's more finely selecting the real data to be collected, for example.

### First embodiment

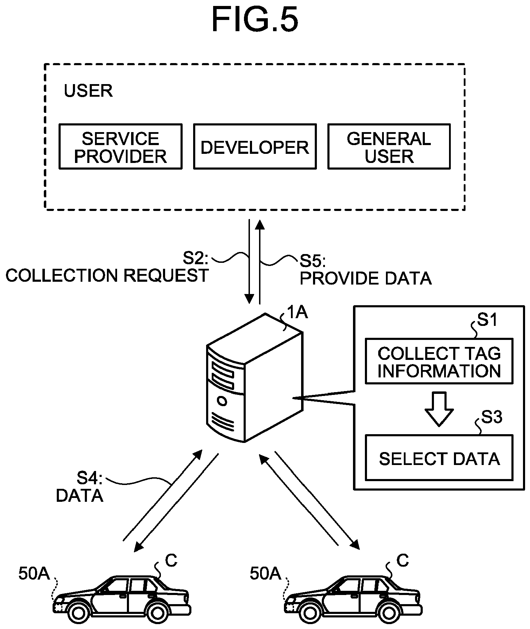

The following describes an outline of the data collection method according to the embodiment with reference to FIG. 5. FIG. 5 is a diagram of an outline of the data collection method. The data collection method is carried out by data communications performed between a data collection apparatus 1A and on-vehicle device 50A illustrated in FIG. 5.

The data collection apparatus 1A is a server device that receives a collection request for data from users, collects the data from the on-vehicle device 50A based on the received collection request, and provides the collected data to the users.

In the example illustrated in FIG. 5, the users are service providers, developers, and general users. In other words, the data collection apparatus 1A collects data desired by the users instead of the users and provides the collected data to them. The data collection apparatus 1A may provide services for the general users out of the users. The general users include users outside a vehicle and users inside a vehicle (e.g., drivers).

In the following description, the service provided by the data collection apparatus 1A is a service of collecting video data desired by the general user from the on-vehicle device 50A and providing the collected video data to the general user.

Specifically, as illustrated in FIG. 5, the data collection apparatus 1A collects tag information of acquired data acquired by vehicles from the on-vehicle device 50A of the respective vehicles (Step S1).

The acquired data includes travel data relating to travel of the vehicle and video data taken in the vehicle, for example. The tag information is additional information of the data (information indicating the outline and characteristics of the data and suitably used as index data) and includes meta-information, positional information, and time information on the data. The data collection apparatus 1A can collect the tag information of the data that satisfies the collection condition varying depending on the service provided to the general user at Step S1.

Subsequently, the data collection apparatus 1A receives a collection request for data from the general user using a terminal, such as a home computer connected to the Internet (Step S2). The data collection apparatus 1A, for example, receives a collection request for video data inside a vehicle in which a family member rides from the general user.

The data collection apparatus 1A may receive a collection request from a driver serving as the general user via the on-vehicle device 50A. The data collection apparatus 1A, for example, receives a collection request for video data on a certain point from the driver via the on-vehicle device 50A.

Subsequently, the data collection apparatus 1A selects data that satisfies the collection request received at Step S2 (Step S3). If the data collection apparatus 1A receives a collection request for video data inside the vehicle described above, the data collection apparatus 1A selects video data inside the vehicle in which the specified family member rides as data that satisfies the collection condition.

If the data collection apparatus 1A receives a collection request for video data on a certain point, the data collection apparatus 1A selects video data taken from a vehicle near the point as data that satisfies the collection condition. In other words, the processing at Step S3 is selecting a vehicle having the data that satisfies the collection condition.

Subsequently, the data collection apparatus 1A collects the data selected at Step S3 (Step S4). Specifically, the data collection apparatus 1A transmits an instruction data for causing the on-vehicle device 50A of the vehicle having the data selected at Step S3 to transmit the data. As a result, the data collection apparatus 1A can acquire the data from the on-vehicle device 50A.

Consequently, the data collection apparatus 1A can collect only the desired data. In other words, the data collection apparatus 1A collects only the data desired by the general user from the on-vehicle device 50A, thereby reducing the load on communications between the data collection apparatus 1A and the on-vehicle device 50A.

As a result, the data collection apparatus 1A can quickly collect the data. Subsequently, the data collection apparatus 1A provides the data collected from the on-vehicle device 50A to the general user (Step S5).

As described above, the data collection apparatus 1A according to the embodiment collects only the data desired by the user from the on-vehicle device 50A, thereby reducing the communication traffic of the data transmitted from the on-vehicle device 50A.

As described above, the data collection apparatus 1A according to the embodiment can quickly collect the data desired by the user from the on-vehicle device 50A. Consequently, the data collection apparatus 1A according to the embodiment can quickly provide the data.

While the user is a general user in the example describes above, the user may be a service provider or a developer, for example, as described above.

The following describes the configuration of the data collection system according to the embodiment with reference to FIG. 6. FIG. 6 is a diagram of a configuration example of the data collection system. As illustrated in FIG. 6, a data collection system S includes the data collection apparatus 1A, a plurality of user terminals 10, and a plurality of on-vehicle device 50A.

The data collection apparatus 1A, the user terminals 10, and the on-vehicle device 50A are connected via a network N. The data collection apparatus 1A collects data from the on-vehicle device 50A based on collection requests including vehicle selection information received from the user terminals 10 and provides the data to the user terminals 10.

The user terminal 10 is a terminal operated by the user and is a mobile phone such as a smartphone, a tablet terminal, a personal digital assistant (PDA), a desktop personal computer (PC), or a notebook PC, for example. The user terminal 10 includes a computer and various circuits having a central processing unit (CPU), a read only memory (ROM), a random access memory (RAM), a hard disk drive (HDD), and an input-output port, for example.

The on-vehicle device 50A are communication devices mounted on the respective vehicles. The on-vehicle device 50A stores travel information on the vehicle and other information in an internal storage medium. The on-vehicle device 50A selects data based on instruction data transmitted from the data collection apparatus 1A and transmits the data to the data collection apparatus 1A.

The following describes a configuration example of the data collection apparatus 1A according to the embodiment with reference to FIG. 7. FIG. 7 is a block diagram of the data collection apparatus 1A. As illustrated in FIG. 7, the data collection apparatus 1A includes a communicator 2A, a controller 3A, and a storage unit 4A.

The communicator 2A is a communication interface that transmits and receives information to and from the network N. The controller 3A can transmit and receive various kinds of information to and from the other components via the communicator 2A and the network N.

The controller 3A includes a collector 31A, a receiver 32A, a selector 33A, an instruction data transmitter 34A, and a provider 35A. The controller 3A includes a computer and various circuits having a CPU, a ROM, a RAM, an HDD, and an input-output port, for example.

The CPU of the computer reads and executes a computer program stored in the ROM, for example, thereby functioning as the collector 31A, the receiver 32A, the selector 33A, the instruction data transmitter 34A, and the provider 35A of the controller 3A.

At least part or all of the collector 31A, the receiver 32A, the selector 33A, the instruction data transmitter 34A, and the provider 35A of the controller 3A may be provided as hardware, such as an application specific integrated circuit (ASIC) and a field programmable gate array (FPGA).

The storage unit 4A corresponds to a RAM or an HDD, for example. The RAM or the HDD includes a vehicle information database 41A, a collection condition database 42A, a tag information database 43A, and a real data database 44A. The data collection apparatus 1A may acquire the computer program and the various kinds of information described above via another computer or a portable recording medium connected by a wired or wireless network.

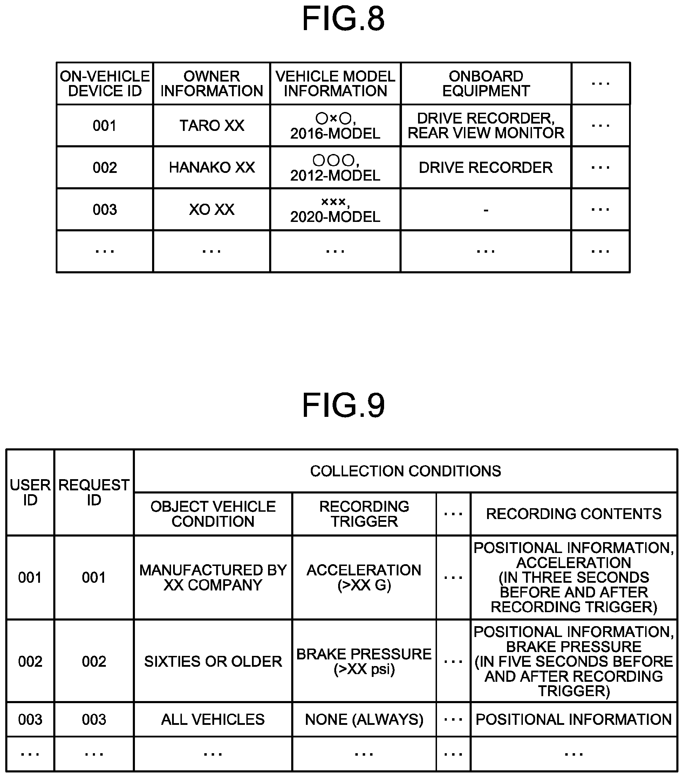

The vehicle information database 41A includes a vehicle information table relating to the vehicles. FIG. 8 is a diagram of an example of the vehicle information table. As illustrated in FIG. 8, a vehicle information table 41a is information having "on-vehicle device ID", "owner information", "vehicle model information", and "onboard equipment" in a manner associated with one another, for example.

The "on-vehicle device ID" is an identifier for identifying an on-vehicle device 50A. The "owner information" is information on the owner of the vehicle provided with the on-vehicle device 50A. While the example in FIG. 8 illustrates the name of the owner as the owner information, the owner information may include sex, age, address, and occupation of the owner, for example.

The "vehicle model information" is information on the model of the vehicle and includes the model name and the model year. The "onboard equipment" is information on the equipment of the vehicle and includes information on whether a camera is present and the type of the camera, for example.

Referring back to FIG. 7, the following describes the collection condition database 42A. The collection condition database 42A includes a collection condition table relating to the collection conditions received from the user terminals 10. FIG. 9 is a diagram of an example of the collection condition table.

As illustrated in FIG. 9, a collection condition table 42a is information having "user ID", "request ID", and "collection conditions" in a manner associated with one another. The "user ID" is an identifier for identifying a user.

The "request ID" is an identifier for identifying a collection request. The "collection conditions" are information indicating collection conditions for real data. The "collection conditions" include "object vehicle condition", "recording trigger", and "collection contents", for example.

The "object vehicle condition" indicates a condition for vehicles serving as collection objects. The "recording trigger" indicates a trigger to start recording the real data in the on-vehicle device 50A. The "recording contents" are information indicating the real data recorded in the on-vehicle device 50A.

In the example illustrated in FIG. 9, the object vehicles corresponding to the request ID "001" are vehicles "manufactured by XX company", the recording trigger is acceleration (>XX G), and the collection contents are the positional information and the acceleration (in three seconds before and after the recording trigger).

In this case, if the on-vehicle device 50A detects that the acceleration exceeds XX G, the on-vehicle device 50A records data on the acceleration in three seconds before and after the timing when the acceleration exceeds XX G together with the positional information.

The object vehicles corresponding to the request ID "002" are vehicles driven by users in their sixties or older, the recording trigger is brake pressure (>XX psi), and the recording contents are data (in five seconds before and after) the timing when the brake pressure exceeds XX psi.

In this case, if the on-vehicle device 50A detects that the brake pressure exceeds XX psi, the on-vehicle device 50A records data on the brake pressure in five seconds before and after the timing when the acceleration exceeds XX G together with the positional information.

As indicated by the request ID "003", the object vehicles may be all vehicles. Furthermore, as indicated by the request ID "003", no recording trigger may be set, thereby causing the on-vehicle device 50A to always record data.

Referring back to FIG. 7, the following describes the tag information database 43A. The tag information database 43A stores therein the tag information transmitted from the on-vehicle device 50A. The tag information database 43A stores therein the tag information for each of the request IDs in a manner associated with information on time, tag information ID, and on-vehicle device ID, for example. The tag information database 43A is an example of a tag information storage unit.

The real data database 44A stores therein the real data collected from the on-vehicle device 50A based on the tag information. The information stored in the tag information database 43A and the real data database 44A is appropriately provided to the users by the provider 35A.

The following describes the components of the controller 3A. The collector 31A of the controller 3A collects the tag information of the acquired data acquired by the vehicles from the on-vehicle device 50A mounted on the respective vehicles.

The collector 31A can collect, from the on-vehicle device 50A, the tag information of the acquired data that satisfies the collection condition described in the collection condition file generated for each of the on-vehicle device 50A by the selector 33A, which will be described later. The collector 31A stores the collected tag information in the tag information database 43A.

Specifically, the collector 31A receives tag update information for the tag information from the on-vehicle device 50A and updates the stored contents in the tag information database 43A with the received tag update information. The collector 31A thus can synchronize the tag information stored in the on-vehicle device 50A with the tag information stored in the tag information database 43A.

The collector 31A can also collect the acquired data transmitted from the on-vehicle device 50A. The collector 31A registers the collected real data in the real data database 44A.

The receiver 32A receives a collection request for the acquired data from the user. The receiver 32A can receive the collection request from the general user inside the vehicle via the on-vehicle device 50A and receive the collection request from the general user outside the vehicle via the user terminal 10.

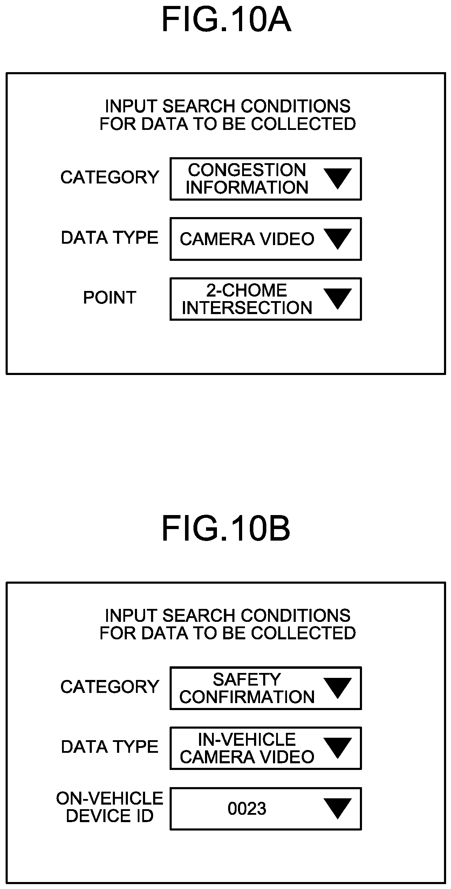

FIGS. 10A and 10B are diagrams of examples a reception screen that receives specification of the collection condition. FIG. 10A illustrates the reception screen for the general user inside the vehicle, and FIG. 10B illustrates the reception screen for the general user outside the vehicle.

The reception screen for the general user inside the vehicle is displayed on a touch panel display (not illustrated) in the vehicle, and the reception screen for the general user outside the vehicle is displayed on the user terminal 10.

As illustrated in FIG. 10A, the reception screen for the general user inside the vehicle can receive specification of "category", "data type", and "point", for example. The "category" indicates the category of the use purpose of the data. The "data type" indicates the type of data to be collected. The "point" indicates the position from which the data is to be collected.

In the example illustrated in FIG. 10A, the category is congestion information, the data type is camera video, and the point is 2-chome intersection. In other words, in the example illustrated in FIG. 10A, the receiver 32A receives specification of the collection condition of camera video taken at the 2-chome intersection.

As illustrated in FIG. 10B, the reception screen for the general user outside the vehicle enables the general user to specify "on-vehicle device ID" besides "category" and "data type".

In the example illustrated in FIG. 10B, the "category" is safety confirmation, and the data type is in-vehicle camera video. In this case, the receiver 32A receives specification of the collection condition of video data taken by the in-vehicle camera of the vehicle corresponding to the on-vehicle device ID "0023". The on-vehicle device ID illustrated in FIG. 10B, for example, may be limited to the on-vehicle device ID of the vehicle owned by a family member of the general user.

The receiver 32A may receive specification of the collection condition by a voice operation by the general user. In this case, the receiver 32A may receive specification of the collection condition via a voice recognition device (not illustrated) in the vehicle, for example.

Referring back to FIG. 7, the following describes the selector 33A. The selector 33A selects data that satisfies the collection request received by the receiver 32A based on the tag information collected by the collector 31A.

The following describes a case where the collection condition is video data taken at the 2-chome intersection described above (hereinafter, referred to as a specific position). In this case, the selector 33A refers to the tag information database 43A to select a vehicle that has passed through the specific position or a vehicle that is going to pass through the specific position.

As described above, the tag information includes the positional information on the vehicles, for example. The selector 33A can calculate travel routes of the respective vehicles based on chronological changes in the positional information.

Dynamically changing information, such as congestion information, are needed to be fresh. The data that satisfies the collection request specified by the general user, however, may possibly fail to be acquired in real time.

Specifically, if no vehicle passes through the specific position in a certain period of time, the data on the specific position fails to be collected from the on-vehicle device 50A in the certain period of time. To address this, the selector 33A selects a vehicle that can perform an operation of acquiring data. In other words, the selector 33A selects a vehicle that satisfies a vehicle selection condition included in the collection request.

In this case, the selector 33A may select video data retained by the vehicle that has passed through the specific position last or a predetermined number of vehicles that have passed therethrough before the last vehicle as the data that satisfies the collection request.

Subsequently, the selector 33A refers to the vehicle information database 41A to determine whether the onboard equipment of the vehicle provided with the on-vehicle device 50A includes a camera (including a drive recorder).

In other words, the selector 33A may select video data retained by a vehicle including a camera out of the vehicles that have passed through the specific position or the vehicles that are going to pass therethrough as the data that satisfies the collection request.

The following describes a case where the collection condition is video data taken by the in-vehicle camera of the vehicle (hereinafter, referred to as a specified vehicle) corresponding to the on-vehicle device ID "0023".

Because the data to be collected is specified by the collection condition described above, the selector 33A can select the data specified by the collection condition as the data that satisfies the collection condition.

As described above, the selector 33A selects the vehicle based on the collection request, thereby appropriately collecting the data desired by the general user.

The selector 33A notifies the instruction data transmitter 34A of the on-vehicle device ID of the vehicle in a manner associated with the request ID (refer to FIG. 9). As a result, the instruction data transmitter 34A, which will be described later, transmits the instruction data for causing the on-vehicle device 50A to transmit the data selected by the selector 33A to the on-vehicle device 50A.

The following describes processing performed by the selector 33A in response to the collection request of a user other than the general user. The selector 33A selects a vehicle that satisfies the collection condition. The selector 33A refers to the vehicle information database 41A to select a vehicle that satisfies the collection condition from the collection condition database 42A. If a vehicle satisfies a plurality of collection conditions, the collection conditions are applied to the vehicle.

The selector 33A generates the collection condition file indicating the collection conditions corresponding to the vehicles and transmits the collection condition file to the on-vehicle device 50A via the communicator 2A. If the collection condition database 42A is updated, the selector 33A may update the collection condition file.

If the collection condition file is updated, the selector 33A can synchronize the updated collection condition file with the collection condition file stored in the on-vehicle device 50A. Consequently, the data collection apparatus 1A can collect only the object data (real data: acquired data with no tag information) needed by the users and avoid collecting unnecessary object data.

The instruction data transmitter 34A transmits, to the on-vehicle device 50A, the instruction data for causing the on-vehicle device 50A to transmit the acquired data that satisfies the collection request received by the receiver 32A based on the tag information collected by the collector 31A.

Specifically, the instruction data transmitter 34A transmits, to the on-vehicle device 50A that provides the tag information selected as the acquired data that satisfies the collection request by the selector 33A, the instruction data for causing the on-vehicle device 50A to transmit the acquired data. As a result, the on-vehicle devices 50A transmit the collected data to the data collection apparatus 1A based on the instruction data.

The provider 35A provides the acquired data collected by the collector 31A to the user terminal 10 or the on-vehicle device 50A of the general user that issues the collection request. If the data fails to be collected in real time as described above, the provider 35A generates acquired data conforming to the collection request (assumed user vehicle state data) based on the previous data and provides the assumed acquired data.

When providing the assumed acquired data, the provider 35A may add the reliability to the assumed acquired data. The provider 35A, for example, calculates the reliability based on the freshness of the previous data used for assumption. In other words, the provider 35A calculates the reliability lower as the previous data used for assumption is older and calculates the reliability higher as the previous data used for assumption is newer.

As described above, the provider 35A can provide the data corresponding to the collection request by assuming the present data from the previous data. By adding the reliability, the provider 35A can prevent in advance the general user from misunderstanding.

The following describes a configuration example of the on-vehicle device 50A with reference to FIG. 11. FIG. 11 is a block diagram of the on-vehicle device 50A. FIG. 11 also illustrates a vehicle speed sensor 91, a steering angle sensor 92, a G sensor 93, a camera 94, and a position information detector 95. The vehicle speed sensor 91 detects the vehicle speed of the vehicle. The steering angle sensor 92 detects the steering angle of the vehicle. The G sensor 93 detects the acceleration of the vehicle. The camera 94 photographs the surroundings of the vehicle. The position detection device 95 detects the position of the vehicle.

The vehicle speed sensor 91, the steering angle sensor 92, the G sensor 93, the camera 94, and the position detection device 95 are connected to the on-vehicle device 50A via an onboard network B, such as CAN communications. The vehicle speed sensor 91, the steering angle sensor 92, the G sensor 93, the camera 94, and the position detection device 95 are examples of a vehicle state detecting unit.

The on-vehicle device 50A includes a communicator 6A, a controller 7A, and a storage unit 8A. The communicator 6A is a communication interface that transmits and receives information to and from the network N. The controller 7A can transmit and receive various kinds of information to and from the other components via the communicator 6A and the network N.

The controller 7A includes an acquirer 71A, a detector 72A, a selector 73A, and a transmitter 74A. The controller 7A includes a computer and various circuits having a CPU, a ROM, a RAM, an HDD, and an input-output port, for example.

The CPU of the computer reads and executes a computer program stored in the ROM, for example, thereby functioning as the acquirer 71A, the detector 72A, the selector 73A, and the transmitter 74A of the controller 7A.

At least part or all of the acquirer 71A, the detector 72A, the selector 73A, and the transmitter 74A of the controller 7A may be provided as hardware, such as an ASIC and a FPGA.

The storage unit 8A corresponds to a RAM or an HDD, for example. The RAM or the HDD includes a tag information storage unit 81A, a real data storage unit 82A, and a collection condition storage unit 83A. The on-vehicle device 50A may acquire the computer program and various kinds of information described above via another computer or a portable recording medium connected by a wired or wireless network.

The following describes the tag information storage unit 81A. The tag information is data serving as index data of the corresponding real data and is used by the user to determine whether it is needed to check the real data, for example. The tag information preferably enables the user to visually recognize the corresponding real data. Consequently, the tag information preferably has not a form of simply part and an outline of the real data but what is called a metadata form produced by processing the real data so as to facilitate the user's recognition.

Specifically, the tag information includes date and time data of the trigger (timing at which the collection condition is satisfied), position data, the data size of the real data, and the value level of the cause of the trigger (if the acceleration value is the trigger, it is the level of the acceleration value (e.g., smaller than a threshold, twice the threshold, three times the threshold, ...)), for example. The tag information is generated based on the real data as follows: the date and time data, the position data, and other data are obtained as detection values (processing of rounding off the significant values is performed as needed), and the level value is generated by processing the detection values using a predetermined expression or a table data, for example. The tag data generated in this manner is stored in the tag information storage unit 81A.

While the tag information does not greatly affect the storage capacity because it has a smaller data amount than the real data, deletion of the real data eliminates or reduces the need for the tag information. Consequently, the tag data may be deleted in synchronization with deletion of the real data if the storage capacity has no margin.

Because the tag information is used by the user to select and search for the real data, the real-time property is important for the tag information. When generating the tag information, the on-vehicle device 50A transmits it to the data collection apparatus 1A quickly (immediately if the communications can be performed).

The tag information stored in the on-vehicle device 50A needs to be the same as the tag information stored in the data collection apparatus 1A. If the on-vehicle device 50A updates (newly generates or deletes) the tag information, the on-vehicle device 50A needs to quickly transmit the information to the data collection apparatus 1A and synchronize and update the tag information in the data collection apparatus 1A. If the data collection apparatus 1A deletes the tag information, the on-vehicle device 50A may delete the tag information and the corresponding real data if the capacity of the storage device has no margin.

The real data storage unit 82A stores therein the real data (object real data) of each collection object type that satisfies the collection condition. The real data storage unit 82A stores therein the real data and the tag information in a manner associated with each other. The real data storage unit 82A, for example, is a ring buffer storage medium and updates older real data with new data in order at any time. The real data storage unit 82A is an example of a vehicle state data storage unit.

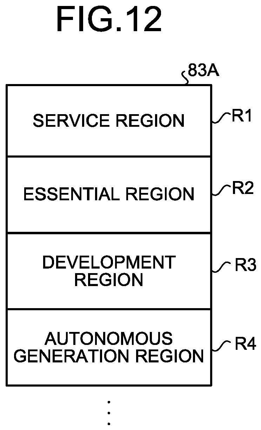

The collection condition storage unit 83A registers therein the data collection conditions of the respective on-vehicle device 50A. FIG. 12 is a diagram of an example of the collection condition storage unit 83A.

AS illustrated in FIG. 12, the collection condition storage unit 83A is divided into a plurality of regions. The regions in the collection condition storage unit 83A store therein respective collection conditions having different use purposes.

Specifically, the collection condition storage unit 83A is divided into a service region R1, an essential region R2, a development region R3, and an autonomous generation region R4. The service region R1, for example, stores therein the collection conditions specified by services for the general users by a service provider that provides the services for the general users or the manager of the data collection apparatus 1A.

The essential region R2 stores therein the collection conditions on which collection of data is essential. The essential region R2, for example, stores therein the collection conditions relating to human life. Specifically, the essential region R2 stores therein the collection conditions for emergency vehicles, such as fire engines and police vehicles. The data collection condition (data type) of the essential region R2 is positional information, for example. The data collection apparatus 1A can grasp the positional information on the vehicles in real time based on the positional information.

If a fire or a traffic accident occurs near the vehicles, for example, the data collection apparatus 1A transmits a transmission request for requesting camera video from the on-vehicle device 50A positioned near the scene. The data collection apparatus 1A provides the camera video to the emergency vehicles, thereby enabling the emergency vehicles to check the state of the scene before arriving at the scene.

The development region R3 stores therein the collection conditions for developers of vehicles. The developers of vehicles, for example, can use the real data collected based on the transmission request for development of autonomous vehicles.

The autonomous generation region R4 stores therein the collection conditions autonomously generated by the on-vehicle device 50A. If the on-vehicle device 50A detects abnormality in the vehicle, for example, the on-vehicle device 50A can generate the collection conditions relating to a phenomenon similar to the abnormality and store it in the autonomous generation region R4.

With this configuration, the data collection apparatus 1A, for example, can collect the tag information and the real data from the on-vehicle device 50A, collect data for identifying the cause of abnormality, identify the cause based on the data, and transmit a measure to the on-vehicle device 50A.

Referring back to FIG. 11, the following describes the acquirer 71A of the controller 7A. The acquirer 71A acquires the collection condition and the collection request from the data collection apparatus 1A. The acquirer 71A updates the collection condition storage unit 83A of the storage unit 8A with the acquired collection condition.

As a result, the collection condition storage unit 83A of the storage unit 8A is updated with the latest data (synchronized with the collection conditions stored in the data collection apparatus 1A). The acquirer 71A functions as a vehicle information data input unit.

The detector 72A detects an event that satisfies the collection condition stored in the collection condition file. If the detector 72A detects an event that satisfies the collection condition stored in the collection condition file, the detector 72A generates the tag information corresponding to the collection condition and transmits it to the selector 73A and the transmitter 74A.

If the detector 72A detects abnormality in the vehicle, for example, the detector 72A generates the collection condition based on the abnormality. The detector 72A can store the collection condition in the autonomous generation region R4 (refer to FIG. 12) and request the data collection apparatus 1A to analyze the abnormality via the transmitter 74A. The detector 72A is an example of a tag information generator.

The selector 73A stores the real data that satisfies the collection condition in a manner associated with the tag information transmitted from the detector 72A in the real data storage unit 82A. In other words, the selector 73A can select the real data that satisfies the collection condition and store it in the real data storage unit 82A.

If the data collection apparatus 1A transmits a transmission request, the selector 73A may select the real data specified by the transmission request (real data specified by the user or others based on the tag information in the data collection apparatus 1A) from the real data storage unit 82A and notify the transmitter 74A of the real data.

The transmitter 74A transmits the tag information generated by the detector 72A to the data collection apparatus 1A and transmits the real data selected by the selector 73A to the data collection apparatus 1A.

Consequently, the data collection apparatus 1A can provide the real data desired by the users and the tag data corresponding to the real data to the users. The transmitter 74A is an example of a tag information transmitter and a vehicle state data transmitter.

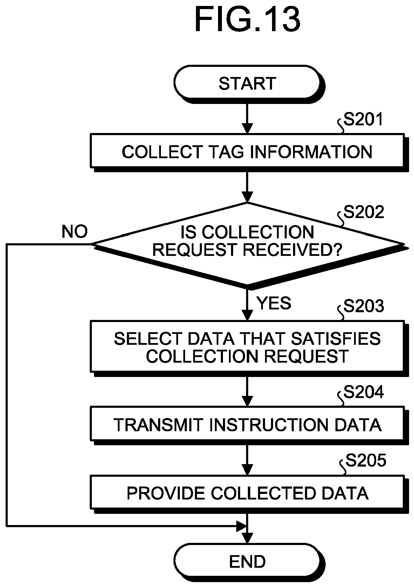

The following describes a procedure performed by the data collection apparatus 1A according to the embodiment with reference to FIG. 13. FIG. 13 is a flowchart of the procedure performed by the data collection apparatus 1A according to the embodiment. This processing is repeatedly performed while the data collection apparatus 1A is operating.

As illustrated in FIG. 13, the data collection apparatus 1A collects tag information from the on-vehicle device 50A of the respective vehicles (Step S201). Subsequently, the data collection apparatus 1A determines whether it has received a collection request from the general user (Step S202).

If the data collection apparatus 1A has received a collection request (Yes at Step S202), the data collection apparatus 1A selects data that satisfies the collection request based on the tag information (Step S203). Subsequently, the data collection apparatus 1A transmits an instruction data to the on-vehicle device 50A corresponding to the data selected at Step S203 (Step S204). the data collection apparatus 1A provides the collected object data (Step S205) and ends the processing.

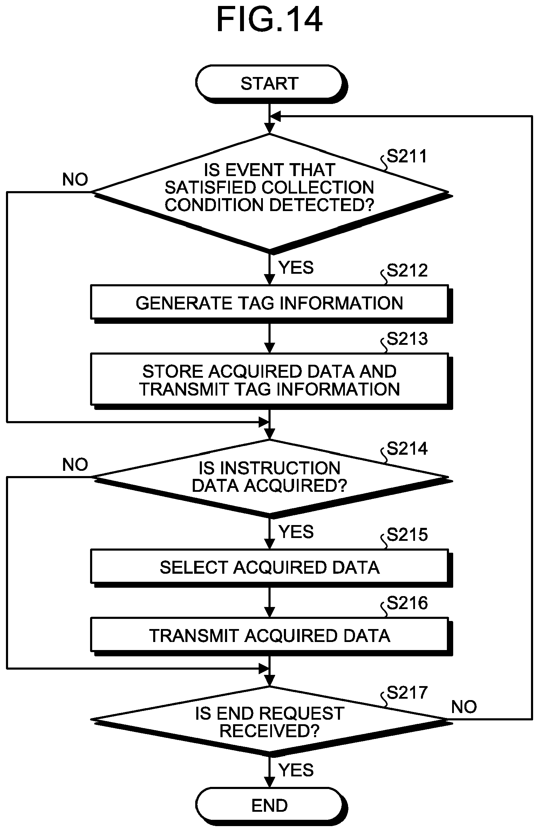

The following describes a procedure performed by the on-vehicle device 50A with reference to FIG. 14. FIG. 14 is a flowchart of the procedure performed by the on-vehicle device 50A. This processing is performed when a collection request for data is received.

As illustrated in FIG. 14, the on-vehicle device 50A determines whether it has detected an event that satisfies the collection condition (Step S211). If the on-vehicle device 50A has detected an event (Yes at Step S211), the on-vehicle device 50A generates the tag information specified by the collection condition file (Step S212). If the on-vehicle device 50A has not detected an event at Step S211 (No at Step S211), the on-vehicle device 50A performs the processing at Step S214.

Subsequently, the on-vehicle device 50A stores therein the real data corresponding to the tag information and transmits the tag information (Step S213). The on-vehicle device 50A determines whether it has acquired instruction data from the data collection apparatus 1A (Step S214).

If the on-vehicle device 50A has acquired instruction data (Yes at Step S214), the on-vehicle device 50A selects the acquired data to be transmitted (Step S215). Subsequently, the on-vehicle device 50A transmits the selected acquired data to the data collection apparatus 1A (Step S216). The on-vehicle device 50A determines whether it has received an end request for finishing collecting the acquired data (Step S217). The end request includes updating the collection condition file, for example.

If the on-vehicle device 50A has received an end request (Yes at Step S217), the on-vehicle device 50A ends the processing. If the on-vehicle device 50A has not received an end request (No at Step S217), the on-vehicle device 50A performs the processing at Step S211 again.

If the on-vehicle device 50A has not acquired instruction data (No at Step S214), the on-vehicle device 50A performs the processing at Step S217.

As described above, the data collection apparatus 1A according to the embodiment includes the collector 31A, the receiver 32A, and the instruction data transmitter 34A. The collector 31A collects tag information of acquired data acquired by a vehicle from the on-vehicle device 50A mounted on the vehicle. The receiver 32A receives a collection request for the acquired data. The instruction data transmitter 34A transmits, to the on-vehicle device 50A, instruction data for causing the on-vehicle device 50A to transmit the acquired data that satisfies the collection request received by the receiver 32A based on the tag information collected by the collector 31A. Consequently, the data collection apparatus 1A according to the embodiment can quickly collect the data.

The data collection apparatus 1A according to the embodiment further includes the provider 35A that provides the acquired data collected from the on-vehicle device 50A to a collection request source.

If the data collection apparatus 1A according to the embodiment collects no acquired data that matches the collection request received by the receiver 32A from the on-vehicle device 50A, the provider 35A generates assumed acquired data conforming to the collection request based on the previously acquired data and provides the assumed acquired data.

In the data collection apparatus 1A according to the embodiment, the provider 35A calculates the reliability of the assumed acquired data. The provider 35A provides the assumed acquired data in a manner associated with the reliability.

In the data collection apparatus 1A according to the embodiment, the tag information includes the positional information on the vehicle. The instruction data transmitter 34A transmits, to the on-vehicle device 50A, the instruction data for causing the on-vehicle device 50A to transmit the acquired data acquired at a specific position based on the positional information on the vehicle.

In the data collection apparatus 1A according to the embodiment, the instruction data transmitter 34A transmits, to the on-vehicle device 50A of the vehicle specified by the collection request, the instruction data for causing the on-vehicle device 50A to transmit the acquired data on the vehicle.

In the data collection apparatus 1A according to the embodiment, if the collector 31A fails to collect the tag information or the acquired data from the specified vehicle, the collector 31A collects the tag information or the acquired data on the specified vehicle from the on-vehicle device 50A of a peripheral vehicle near the specified vehicle.

The data collection system S according to the embodiment includes the data collection apparatus 1A and the on-vehicle device 50A.

In the data collection system S according to the embodiment, if the on-vehicle device 50A fails to transmit the tag information or the acquired data to the data collection apparatus 1A, the on-vehicle device 50A transmits and receives the data via another communication device.

The on-vehicle device 50A according to the embodiment includes the acquirer 71A (an example of the vehicle state input unit), the real data storage unit 82A (an example of the vehicle state data storage unit), the detector 72A (an example of the tag information generator), the transmitter 74A (an example of the tag information transmitter), and the transmitter 74A (an example of the vehicle state data transmitter). The acquirer 71A receives vehicle state data on the vehicle from various vehicle state detecting units mounted on the vehicle. The real data storage unit 82A stores therein the vehicle state data received by the acquirer 71A based on the collection request from the data collection apparatus 1A. The detector 72A generates the tag information of the vehicle state data stored in the real data storage unit 82A based on the collection request from the data collection apparatus 1A. The transmitter 74A transmits the tag information generated by the detector 72A to the data collection apparatus 1A. Based on transmission instruction data for transmitting the vehicle state data based on the tag information received from the data collection apparatus 1A, the transmitter 74A extracts the vehicle state data that satisfies the transmission instruction data from the real data storage unit 82A and transmits the vehicle state data to the data collection apparatus 1A.

While the data collection apparatus 1A and the on-vehicle device 50A of the object vehicle according to the embodiment directly transmit and receive data to and from each other via the network N, the embodiment is not limited thereto.

When receiving a collection request for in-vehicle video data, for example, the on-vehicle device 50A of the object vehicle may possibly be present out of the communication range of the network N.

In this case, the selector 33A selects a second on-vehicle device 50A within the communication range. The instruction data transmitter 34A can transmit, to the second on-vehicle device 50A, a transfer request for transferring the collection request to the on-vehicle device 50A of the object vehicle.

The second on-vehicle device 50A that receives the transfer request can transmit the collection condition to the on-vehicle device 50A of the object vehicle using a communication method other than the network N, such as vehicle-to-vehicle communications. In other words, the on-vehicle device 50A may use a vehicle-to-vehicle ad hoc network.

In this case, the transfer request may be transmitted to the on-vehicle device 50A of the object vehicle via a plurality of on-vehicle device 50A. The on-vehicle device 50A of the object vehicle can transmit the data specified by the collection condition to the data collection apparatus 1A via the vehicle-to-vehicle communications.

As described above, if the data collection apparatus 1A fails to directly communicate with the object vehicle, the data collection system S can collect the data from the object vehicle via other on-vehicle device 50A.

When the data collection apparatus 1A receives the collection request for the positional information of the specified vehicle from the general user outside the vehicle, for example, the vehicle may possibly be present out of the communication range of the network N, or the power of the on-vehicle device 50A may possibly be turned off.

In this case, the data collection apparatus 1A may assume the present position of the specified vehicle based on the previous positional information and request vehicles near the assumed present position to collect video data. In other words, the data collection apparatus 1A can transmit the instruction data to the vehicles other than the specified vehicle.

In this case, the data collection apparatus 1A, for example, can identify the positional information on the specified vehicle by analyzing the video data and provide the positional information to the general user.

### Second embodiment

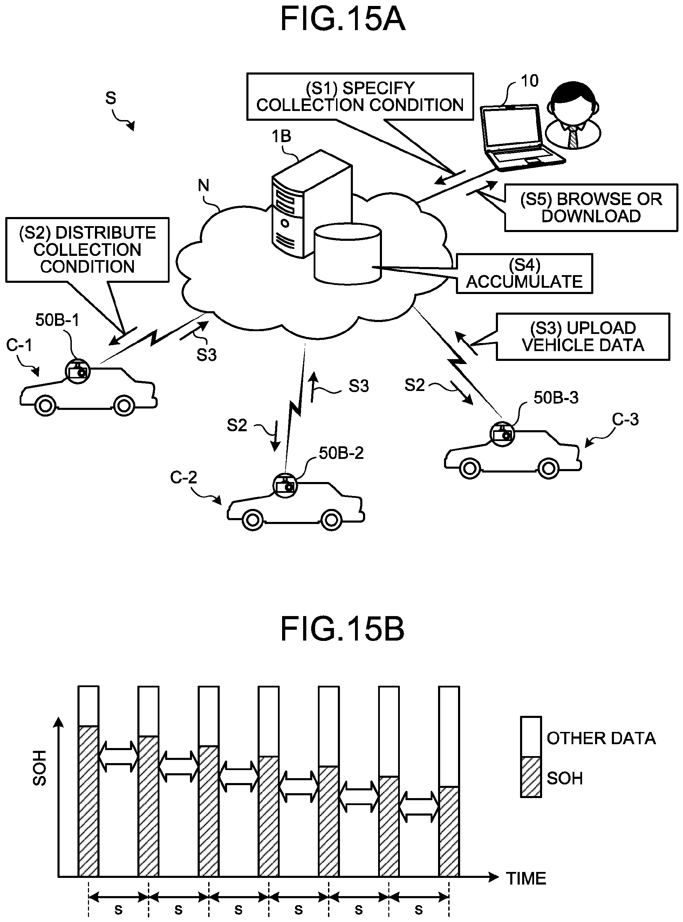

The following describes the data collection system S according to a second embodiment. An outline of the data collection method according to the embodiment is described with reference to FIGS. 15A to 15C. FIGS. 15A to 15C are diagrams for explaining the outline of the data collection method according to the embodiment. FIGS. 15A to 15C illustrate the data collection system S to which the data collection method according to the embodiment is applied.

As illustrated in FIG. 15A, the data collection system S according to the embodiment includes a data collection apparatus 1B, on-vehicle device 50B-1, 50B-2, 50B-3, ... mounted on vehicles C-1, C-2, C-3, ..., respectively, and the user terminal 10. In the following description, the vehicles are referred to as "vehicles C" when they are collectively indicated, and the on-vehicle device are referred to as "on-vehicle device 50B" when they are collectively indicated.

The data collection apparatus 1B is a cloud server that provides cloud services via the network N, such as the Internet and a mobile phone network. The data collection apparatus 1B receives a collection request for vehicle data from the data user, collects the vehicle data from the on-vehicle device 50B based on the received collection request, and provides the collected vehicle data to the data user.

The on-vehicle device 50B is a drive recorder including a camera, various sensors, such as an acceleration sensor and a GPS sensor, a storage device, and a microcomputer, for example. The on-vehicle device 50B retrieves, from the vehicle C, the vehicle data corresponding to the collection request received by the data collection apparatus 1B.

The on-vehicle device 50B appropriately uploads the retrieved vehicle data to the data collection apparatus 1B. The use of the drive recorder also as the on-vehicle device 50B can reduce the number of onboard parts mounted on the vehicle C. Alternatively, the on-vehicle device 50B and the drive recorder may be separated without being integrated.

The user terminal 10 is a terminal used by the data user and is a notebook PC, a desktop PC, a tablet terminal, a PDA, a smartphone, or a wearable device serving as a glasses- or watch-like information processing terminal for example.

The data user is a developer who develops an autonomous driving technique based on the vehicle data provided from the data collection apparatus 1B, for example. The data collection apparatus 1B provides the data user with a user interface (hereinafter, referred to as "UI") screen that can be accessed via the user terminal 10.

As illustrated in FIG. 15A, the data user specifies the collection condition for the vehicle data through the UI screen (Step S1). The data collection apparatus 1B that receives the specification distributes the collection condition to the vehicles C in a file form, for example (Step S2).

The collection condition includes various parameters relating to collection of the vehicle data. The various parameters include "object vehicle", "data type", "collection trigger condition", and "collection period", for example.

The "object vehicle" is an identifier for identifying the vehicle C serving as the collection object. The "data type" is the type of data to be collected, that is, the type of data to be retrieved from the various sensors. Examples of the data type include, but are not limited to, accelerator opening, brake pressure, steering angle, and states of health (SOH: state of battery deterioration) included in controller area network (CAN) information, image taken by the camera, etc. The "collection trigger condition" is a condition serving as a trigger for collection. An example of the "collection trigger condition" is the fact that the vehicle speed exceeds a predetermined speed.

The on-vehicle device 50B appropriately upload the vehicle data acquired in the respective vehicles C to the data collection apparatus 1 (Step S3). The data collection apparatus 1B accumulates the vehicle data (Step S4). The data user browses or downloads the vehicle data accumulated in the data collection apparatus 1B through the UI screen, for example (Step S5) and uses it for an analysis for development.

The vehicle data uploaded by the on-vehicle device 50B includes real data and tag data having index-data properties used to search for the real data and grasp the outline of the real data. FIG. 15A does not illustrate the real data or the tag data.

The data amount of the tag data is much smaller than that of the real data. Consequently, the on-vehicle device 50B, for example, always upload the tag data to The data collection apparatus 1B. The data user, for example, browses the tag data using the user terminal 10 and can cause the on-vehicle device 50B to upload only the real data determined to be needed to The data collection apparatus 1. Consequently, the data collection system S can reduce the communication load. The tag data and the real data that have been uploaded to The data collection apparatus 1B are preferably sequentially deleted from the on-vehicle device 50B.

In the following description, the vehicle data uploaded by the on-vehicle device 50B to The data collection apparatus 1B is the real data.

The state of the vehicle C always changes. As a result, the information desired by the data user also frequently changes in synchronization with the change in the state of the vehicle C. It is inefficient, however, to specify another collection condition every time the desired information changes.

Specifically, let us assume a case where the data user specifies a vehicle having a fast-deteriorating battery, and desires to collect the vehicle data for grasping the battery consumption of the vehicle.

FIG. 15B illustrates the data collection method according to a comparative example. To determine deterioration of the battery, the data user monitors the SOH, for example. In the comparative example, as illustrated in FIG. 15B, the data user needs to extract the SOH from the vehicle data including data other than the SOH and compare the SOH between collection periods s.

If it is needed to compare the SOH at an interval of a longer period than the collection period s, the data user needs to extract pieces of vehicle data to be compared one by one from the previous collected data for the comparison. This method needs a lot of time and effort of the data user.

To detect a change in the state of the vehicles C in the data collection method according to the embodiment, The data collection apparatus 1B collects only the vehicle data needed to detect the change at an interval of a predetermined period. The data collection apparatus 1B automatically distributes the collection condition based on the change in the state of the vehicles C acquired from the collected vehicle data to the on-vehicle device 50B.

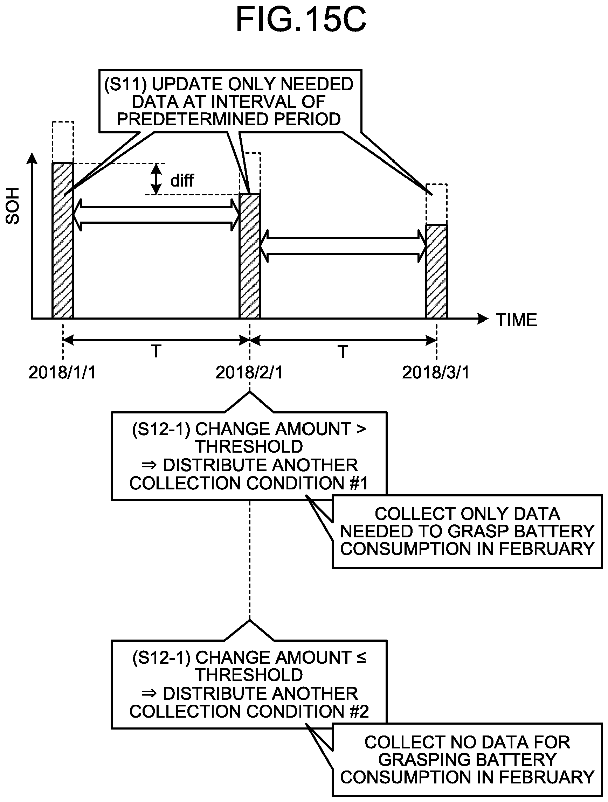

The following describes the case where the data user specifies a vehicle having a fats-deteriorating battery, and desires to collect the vehicle data for grasping the battery consumption of the vehicle. As illustrated in FIG. 15C, in the data collection method according to the embodiment, the data collection apparatus 1B causes the on-vehicle device 50B to update only the needed data at an interval of a predetermined period T (Step S11). In this example, the on-vehicle device 50B updates only the SOH at the beginnings of months.

The data collection apparatus 1B compares the pieces of collected vehicle data for each of the vehicles C. The data collection apparatus 1B distributes another collection condition #1 to the on-vehicle device 50B of the vehicle C having a change amount diff exceeding a predetermined threshold (that is, the vehicle C having a battery determined to deteriorate fast) (Step S12-1). As illustrated in FIG. 15C, the collection condition #1 is "collecting only the data needed to grasp the battery consumption in February". The "data needed to grasp the battery consumption" is accelerator opening ratio, brake frequency, and air-conditioner temperature, for example.

The data collection apparatus 1B distributes another collection condition #2 to the on-vehicle device 50B of the vehicle C having a change amount diff equal to or smaller than the predetermined threshold (that is, the vehicle C having a battery determined not to deteriorate fast) as a result of comparing the pieces of collected vehicle data for each of the vehicles C (Step S12-2). As illustrated in FIG. 15C, the collection condition #2 is "collecting no data for grasping the battery consumption in February". Consequently, the data collection apparatus 1B can efficiently collect the needed vehicle data from only the vehicle C appropriate as the collection object. As described above, "determined or not determined to be the collection object" is one of the collection condition.

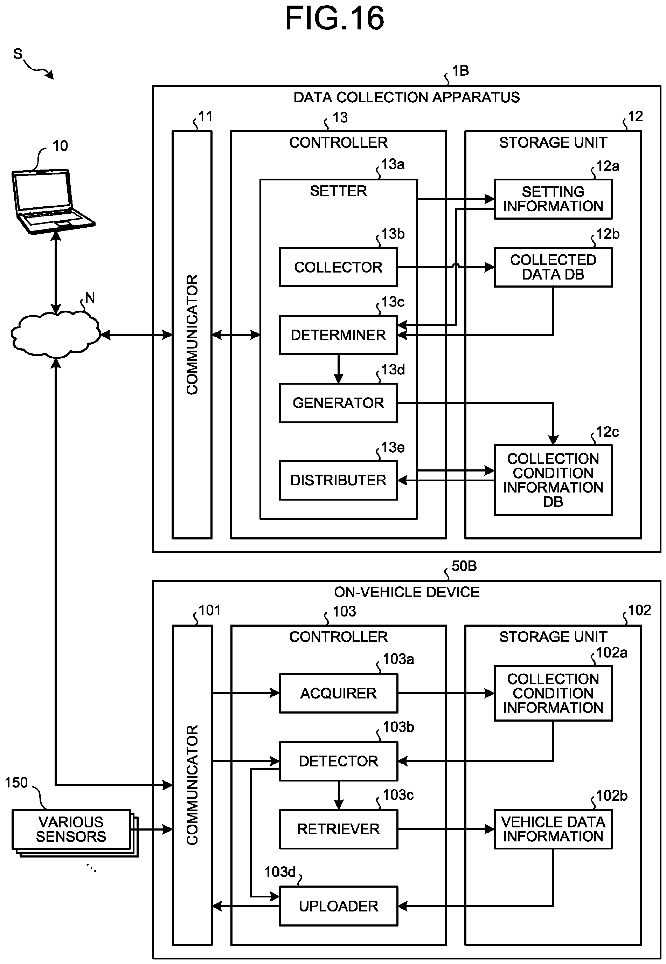

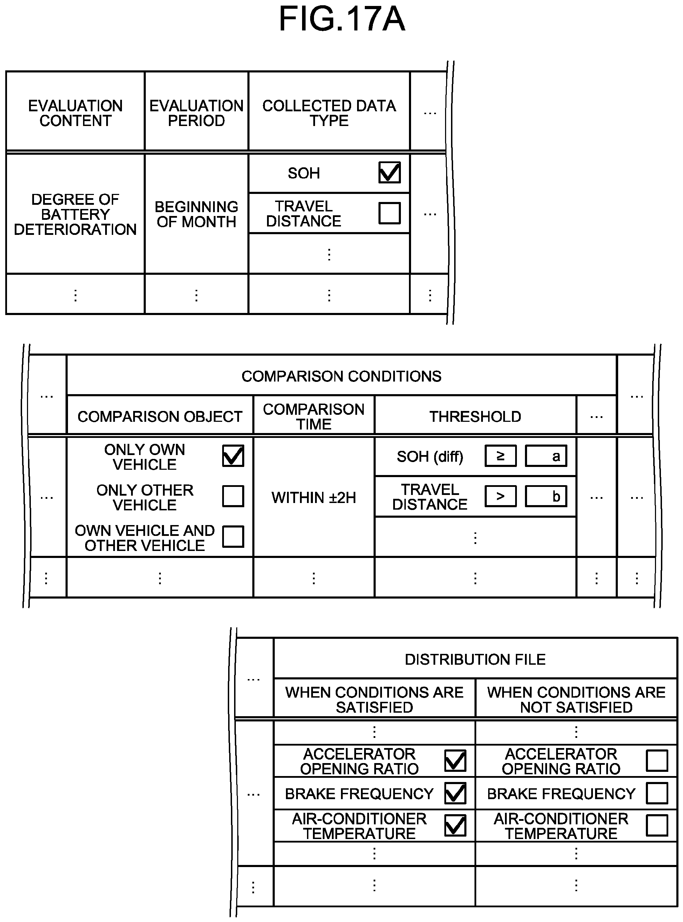

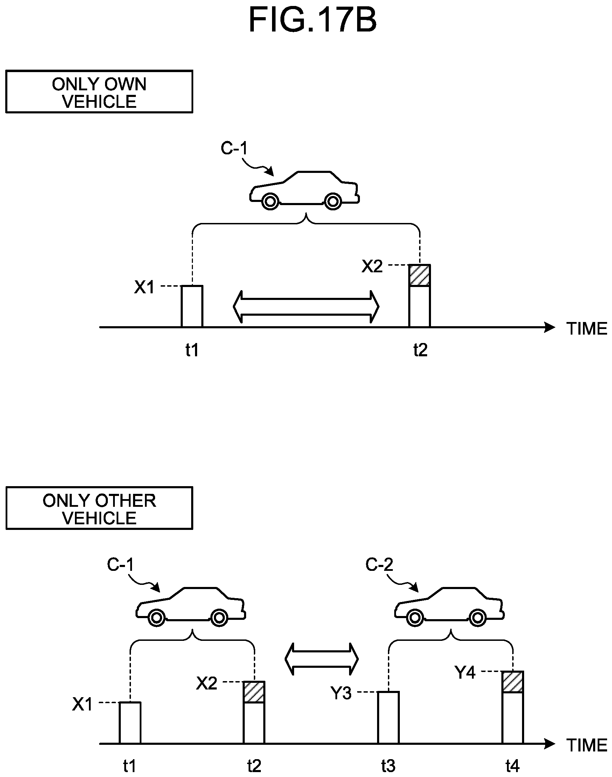

The processing at Step S11, S12-1, and S12-2 is performed based on setting information 12a (refer to FIG. 16) set in advance in the data collection apparatus 1. A specific example of the setting information 12a will be described later with reference to FIGS. 17A and 17B.

As described above, to detect a change in the state of the vehicles C in the data collection method according to the embodiment, the data collection apparatus 1 collects only the vehicle data needed to detect the change at an interval of a predetermined period. The data collection apparatus 1 automatically distributes the collection condition based on the change in the state of the vehicles C acquired from the collected vehicle data to the on-vehicle device 50B.

Consequently, the data collection method according to the embodiment can save the time and effort of the data user and efficiently collect information based on the change in the state of the vehicles.

The vehicle data to detect the change in the state of the vehicles C is preferably prevented from being deleted in at least a certain period longer than the predetermined period T since the vehicle data is retrieved. In FIG. 15C, the SOH data at the beginning of a month preferably remains until at least the beginning of the next month since the SOH data is retrieved. The SOH data at a timing other than the beginnings of months, for example, is not necessarily retrieved or may be retrieved and not necessarily prevented from being deleted.

The following describes a configuration example of the data collection system S according to the embodiment more specifically. FIG. 16 is block diagram of a configuration example of the data collection system S according to the embodiment. FIG. 16 illustrates only the components needed to explain the characteristics of the embodiment and does not illustrate typical components.

In other words, the components illustrated in FIG. 16 are functionally conceptual and are not necessarily physically configured as illustrated in FIG. 16. A specific aspect of distribution and integration of the blocks, for example, is not limited to that illustrated in FIG. 16. All or part of the components may be distributed or integrated functionally or physically in desired units depending on various kinds of loads and states of use, for example.

In the description with reference to FIG. 16, explanation of the components that have been already described may be simplified or omitted.

As illustrated in FIG. 16, the data collection system S according to the embodiment includes the data collection apparatus 1B, the on-vehicle device 50B, and the user terminal 10.

The data collection apparatus 1B is described first. The data collection apparatus 1B includes a communicator 11, a storage unit 12, and a controller 13.

The communicator 11 is a network interface card (NIC), for example. The communicator 11 is connected to the network N by wire or wirelessly and transmits and receives information to and from the on-vehicle device 50B and the user terminal 10 via the network N.

The storage unit 12 is a semiconductor memory device, such as a RAM and a flash memory, or a storage device, such as a hard disk and an optical disc. In the example illustrated in FIG. 16, the storage unit 12 stores therein setting information 12a, a collected data database (DB) 12b, and a collection condition information DB 12c.

The setting information 12a is definition information on execution of the processing at Steps S11, S12-1 and S12-2. The setting information 12a is set by a setter 13a, which will be described later, that receives setting contents from the user terminal 10, for example. A specific example of the setting information 12a is described with reference to FIGS. 17A and 17B. FIGS. 17A and 17B are diagrams of a specific example of the setting information 12a.

As illustrated in FIG. 17A, the setting information 12a is what is called preset information on each evaluation content desired by the data user. In other words, the setting information 12a defines in advance the evaluation period, the collected data type, and other items for each evaluation content desired by the data user, for example. The desired evaluation content may be called a change in the state of the vehicles C to be detected.

The setting information 12a includes an "evaluation content" item, an "evaluation period" item, a "collected data type" item, a "comparison conditions" item, and a "distribution file" item, for example.

The "evaluation content" item stores therein identification information indicating an evaluation content desired by the data user. In this example, the "evaluation content" item stores therein "degree of battery deterioration" according to the example illustrated in FIGS. 15B and 15C.

The "evaluation period" item corresponds to the predetermined period T in FIG. 15C and stores therein "beginning of a month", for example. The "collected data type" item is the type of data to be collected at the beginning of a month, and "SOH" is selected in FIG. 17A, for example. The collection conditions corresponding to the "evaluation period" and the "collected data type" are reflected on the collection condition information DB 12c, which will be described later, by the setter 13a when the setting information 12a is set.

The "comparison conditions" item relates to conditions for comparison between the pieces of vehicle data collected at the beginning of a month, for example, and includes "comparison object", "comparison time", "threshold", and other items. The "comparison object" indicates a comparison object of the vehicle data and includes "only own vehicle", "own vehicle and other vehicle", and "only other vehicle".

In "only own vehicle", as illustrated in FIG. 17B, the data collection apparatus 1B compares the states (measured values) of the own vehicle C-1 between time t1 and time t2. The data collection apparatus 1B changes the processing to be performed next, that is, determines whether to set another collection condition based on whether the difference (X2-X1) between X1 (measured value at time t1) and X2 (measured value at time t2) is larger than a threshold (whether the change in the state is large), for example. In other words, if the change amount is different from the usual amount, the data collection apparatus 1B determines that an abnormality may possibly occur.

In "only other vehicle", as illustrated in FIG. 17B, the data collection apparatus 1B compares the difference of the states (difference of the measured values) of the own vehicle C-1 between time t1 and time t2 and the difference of the states (difference of the measured values) of a second vehicle C-2 (e.g., an average of other vehicles) between time t3 and time t4 (while the time interval is basically equal to that between time t1 and time t2, it may be converted). In this case, the data collection apparatus 1B changes the processing to be performed next based on whether the difference ((Y4-Y3)-(X2-X1)) between the difference (X2-X1) between X1 (measured value at time t1) and X2 (measured value at time t2) of the own vehicle C-1 and the difference (Y4-Y3) between Y3 (measured value at time t3) and Y4 (measured value at time t4) of the second vehicle C-2 is larger than a threshold D, that is, whether the difference between the change in the state of the own vehicle C-1 and the change in the state of the second vehicle C-2 is larger than the threshold D. In other words, if the change amount of the own vehicle C-1 is different from that of the second vehicle C-2, the data collection apparatus 1B determines that an abnormality may possibly occur. In consideration of the difference due to the vehicle model, for example, the data collection apparatus 1B may set a condition of the same vehicle model or the same area to "other vehicle" serving as the comparison object.

In "own vehicle and other vehicle", the data collection apparatus 1B changes the processing to be performed next based on the OR condition of "only own vehicle" and "only other vehicle". In other words, if the change amount is different from the usual amount, the data collection apparatus 1B determines that an abnormality may possibly occur or if the change amount of the own vehicle C-1 is different from that of the second vehicle C-2, the data collection apparatus 1B determines that an abnormality may possibly occur.

As illustrated in FIG. 17A, the "comparison time" indicates a valid range of time between the pieces of vehicle data to be compared, for example. In the example illustrated in FIG. 17A, the pieces of vehicle data "within ±2H" are valid as the comparison object. This is given by way of example only and is not intend to limit the method for specifying the condition relating to time.

The "threshold" is information on the thresholds used for comparison and stores therein threshold conditions for the respective "collected data types", for example. If the "SOH" is selected in the "collected data type" as illustrated in FIG. 17A, the box of SOH in the "threshold" is referred to and used to determine the change amount diff (refer to FIG. 15C). In this example, if the change amount diff is equal to or larger than a, it is determined that the battery deteriorates fast.

While only one threshold condition for SOH is set in this example, a plurality of different threshold conditions may be set depending on the vehicle model, the year of manufacture, and the battery replacement timing, for example. As a result, the data collection apparatus 1B can detect a change in the state of the vehicles C based on the characteristics of the vehicles C and their batteries.

The "distribution file" item is information on the collection conditions distributed when the comparison conditions are satisfied and when the comparison conditions are not satisfied. In the example illustrated in FIG. 17A, when "the conditions are satisfied", only the data types corresponding to the "data needed to grasp the battery consumption" are selected, including at least the "accelerator opening ratio", the "brake frequency", and the "air-conditioner temperature". By contrast, when "the conditions are not satisfied", the data types corresponding to the "data needed to grasp the battery consumption" are not selected.

Based on the "distribution file" item, a generator 13d, which will be described later, generates the distribution file of the collection condition when "the conditions are satisfied" or when "the conditions are not satisfied".

Referring back to FIG. 16, the following describes the collected data DB 12b. The collected data DB 12b accumulates the collected data collected by a collector 13b, which will be described later, from the on-vehicle device 50B. In other words, the collected data DB 12b includes previous records of the collected data. The collected data includes the tag data and the real data described above.

The collection condition information DB 12c stores and accumulates therein the distribution file including the collection condition specified by the setter 13a or the generator 13d. In other words, the collection condition information DB 12c includes previous records of the collection condition.

The controller 13 is a controller provided by a CPU or a micro processing unit (MPU) executing various computer programs stored in a storage device in the data collection apparatus 1B on a RAM serving as a work area, for example. The controller 13 can be provided as an integrated circuit, such as an ASIC and an FPGA.

The controller 13 includes the setter 13a. The setter 13a includes the collector 13b, a determiner 13c, the generator 13d, and a distributer 13e and implements or performs the functions and effects of information processing described below.

The setter 13a receives the setting contents specified by the data user from the user terminal 10 via the communicator 11 and sets them to the setting information 12a. The setter 13a generates the distribution file that reflects the contents corresponding to the collection condition out of the setting contents specified by the data user and stores the distribution file in the collection condition information DB 12c.

The collector 13b collects the vehicle data uploaded from the on-vehicle device 50B via the communicator 11 and accumulates it in the collected data DB 12b.

The determiner 13c refers to the setting information 12a and extracts and compares the vehicle data serving as the comparison object to detect the state of the vehicle C for each of the vehicles C out of the pieces of data stored in the collected data DB 12b. The determiner 13c notifies the generator 13b of the determination result indicating whether the comparison conditions are satisfied as a result of comparison, that is, whether a change in the state of the desired vehicle C is detected. The determination result includes the contents of the "distribution file" item illustrated in FIG. 17A.

Based on the result of determination by the determiner 13c, the generator 13d generates the distribution file including the collection condition based on the change in the state of the vehicle C and stores the distribution file in the collection condition information DB 12c.

The distributer 13e distributes the distribution file including the collection condition stored in collection condition information DB 12c to the vehicle C serving as the object vehicle via the communicator 11.

The following describes the on-vehicle device 50B. The on-vehicle device 50B includes a communicator 101, a storage unit 102, and a controller 103. As described above, the on-vehicle device 50B is connected to various sensors 150, such as a camera, an acceleration sensor, and a GPS sensor.

Similarly to the communicator 11, the communicator 101 is an NIC, for example. The communicator 101 is wirelessly connected to the network N and transmits and receives information to and from the data collection apparatus 1B via the network N. The communicator 101 receives output data from the various sensors 150.

Similarly to the storage unit 12, the storage unit 102 is a semiconductor memory device, such as a RAM and a flash memory, or a storage device, such as a hard disk and an optical disc. In the example illustrated in FIG. 16, the storage unit 102 stores therein collection condition information 102a and vehicle data information 102b.

The collection condition information 102a includes the collection condition distributed from the data collection apparatus 1B. The vehicle data information 102b includes the vehicle data retrieved by a retriever 103c, which will be described later. The vehicle data includes the tag data and the real data described above.

Similarly to the controller 13, the controller 103 is a controller provided by a CPU or an MPU executing various computer programs stored in a storage device in the on-vehicle device 50B on a RAM serving as a work area, for example. The controller 103 can be provided as an integrated circuit, such as an ASIC and an FPGA.

The controller 103 includes an acquirer 103a, a detector 103b, a retriever 103c, and an uploader 103d and implements or performs the functions and effects of information processing described below.

The acquirer 103a acquires the collection condition distributed from the data collection apparatus 1B and stores it in the collection condition information 102a. The detector 103b monitors the output data from the various sensors 150 and detects occurrence of an event serving as a trigger in the collection condition.

If the detector 103b detects occurrence of an event serving as a trigger to retrieve the vehicle data in the collection condition, for example, the detector 103b causes the retriever 103c to retrieve the vehicle data. If the detector 103b detects occurrence of an event serving as a trigger to upload the vehicle data to the data collection apparatus 1B in the collection condition, for example, the detector 103b causes the uploader 103d to upload the vehicle data.

If the detector 103b detects occurrence of a trigger to retrieve the vehicle data, the retriever 103c retrieves the vehicle data based on the output data from the various sensors 150 and stores it in the vehicle data information 102b. If the detector 103b detects occurrence of a trigger to stop retrieving the vehicle data, the retriever 103c stops retrieving the vehicle data.

If the detector 103b detects occurrence of a trigger to upload the vehicle data, the uploader 103d uploads the vehicle data stored in the vehicle data information 102b to the data collection apparatus 1B.

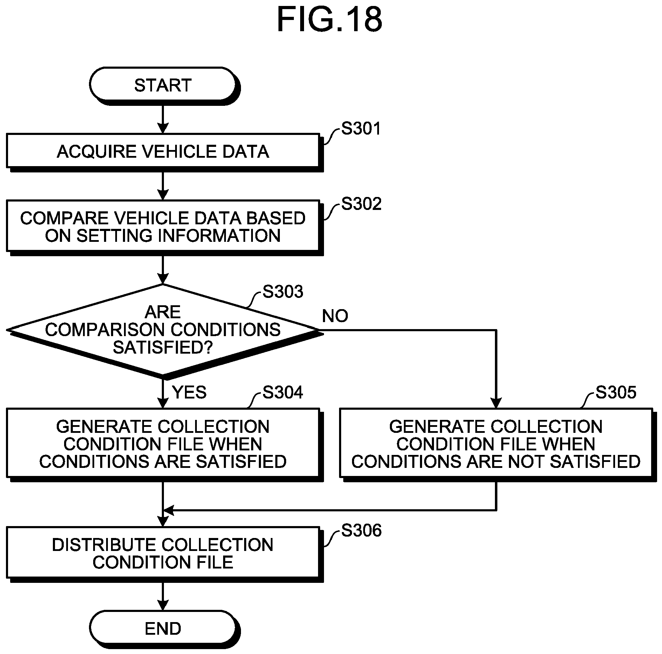

The following describes a procedure performed by the data collection system S according to the embodiment with reference to FIG. 18. FIG. 18 is a flowchart of the procedure performed by the data collection system S according to the embodiment. The procedure described below is performed at a timing when the collection condition needs to be checked and reconsidered, such as a predetermined period or a timing when an instruction is issued by the data user, for example.

The collector 13b acquires the vehicle data (Step S301). The vehicle data herein is vehicle data for detecting the state of the vehicle C set in the setting information 12a.

The determiner 13c compares the pieces of vehicle data based on the setting information 12a (Step S302). If the comparison conditions are satisfied (Yes at Step S303), the generator 13d generates the collection condition file when the conditions are satisfied for the corresponding vehicle C (Step S304).

If the comparison conditions are not satisfied (No at Step S303), the generator 13d generates the collection condition file when the conditions are not satisfied for the corresponding vehicle C (Step S305).

The distributor 13e distributes the corresponding collection condition file to each of the vehicles C (Step S306), and the processing is ended.

As described above, the data collection apparatus 1B according to the embodiment includes the collector 13b and the setter 13a. The collector 13b collects predetermined data on the vehicles C from the on-vehicle device 50B mounted on the respective vehicles C. The setter 13a sets the collection condition for the data on the vehicle C to be collected by the collector 13b from the on-vehicle device 50B based on a change in the predetermined data collected by the collector 13b.

Consequently, the data collection apparatus 1B according to the embodiment can efficiently collect information based on the change in the state of the vehicles C.

The setter 13a generates the collection conditions corresponding to the respective on-vehicle device 50B based on the change in the predetermined data collected by the collector 13b and distributes it to the respective on-vehicle device 50B.

Consequently, the data collection apparatus 1B according to the embodiment can individually distribute the collection conditions based on the change in the state of the vehicles C to the respective on-vehicle device 50B. In other words, the data collection apparatus 1B can efficiently collect information based on the change in the state of the vehicles C. Furthermore, the data collection apparatus 1B can automatically set the collection conditions based on the change in the state of the vehicles C, thereby reducing the load on a person who performs the setting.

The collector 13b collects the predetermined data from the on-vehicle device 50B at an interval of the predetermined period T longer than the data collection period. The setter 13a sets the on-vehicle device 50B serving as the data collection object based on the change amount diff of the predetermined data in the predetermined period T.

Consequently, the data collection apparatus 1B according to the embodiment can determine the change amount diff in a simpler manner not based on the vehicle data collected in each collection period but based on the data collected at an interval of the predetermined period T. The data collection apparatus 1B thus can specify the on-vehicle device 50B serving as the data collection object.

The setter 13a sets the collection condition for the data based on the result of comparison between the change amount diff of the predetermined data and the predetermined threshold.

Consequently, the data collection apparatus 1B according to the embodiment can set the collection condition that unnecessary data collection is not performed on the vehicles C not needed for data collection based on the result of comparison with the predetermined threshold. The data collection apparatus 1B thus can reduce the communication load.

A plurality of the thresholds are set based on the characteristics of the vehicles C. The setter 13a determines the change amount diff of the predetermined data collected from the on-vehicle device 50B using the threshold corresponding to the characteristics of the vehicle C provided with the on-vehicle device 50B.

Consequently, the data collection apparatus 1B according to the embodiment can detect the change in the state of the vehicle C based on the characteristics of the vehicle C.

The setter 13a sets the threshold based on the change amount of the predetermined data in the second vehicle C-2 (corresponding to an example of a "second vehicle other than a first vehicle") with respect to the own vehicle C-1 (corresponding to an example of the "first vehicle").

Consequently, the data collection apparatus 1B according to the embodiment can determine that an abnormality may possibly occur based on the result of comparison with the second vehicle C-2.

While the embodiment detects that the battery deteriorates fast as an example of the state of the vehicle C to be detected, for example, this is given by way of example only and is not intended to limit the detection of the state of the vehicle C.

If the data user desires to detect a change in the state of the vehicle C in rough driving as driving characteristics of the driver, for example, the data collection apparatus 1B may collect the accelerator opening ratio, the brake pressure, the brake frequency, and the steering angle as the vehicle data. If their change ratios are much higher than the respective predetermined thresholds, the data collection apparatus 1B may determine that driving is rough. If the change ratios are equal to or lower than the respective thresholds, the data collection apparatus 1B may determine that driving is moderate. Also in this case, the threshold conditions may differ depending on the vehicle model of the vehicle C, for example.

While the data user according to the embodiment above is a developer of an autonomous driving technique, for example, this is simply an example of the user. The data user may be a corporate user, such as a service provider, or a general individual user.

### Third embodiment

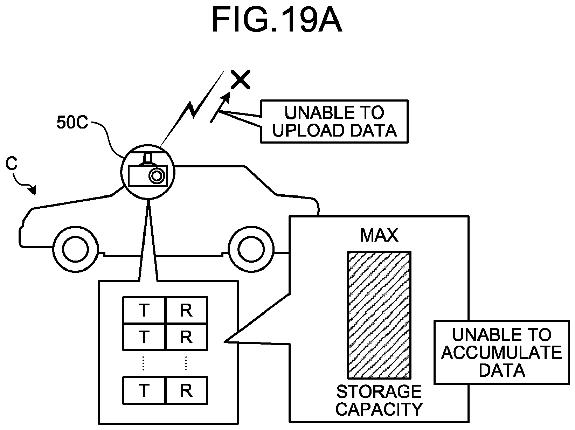

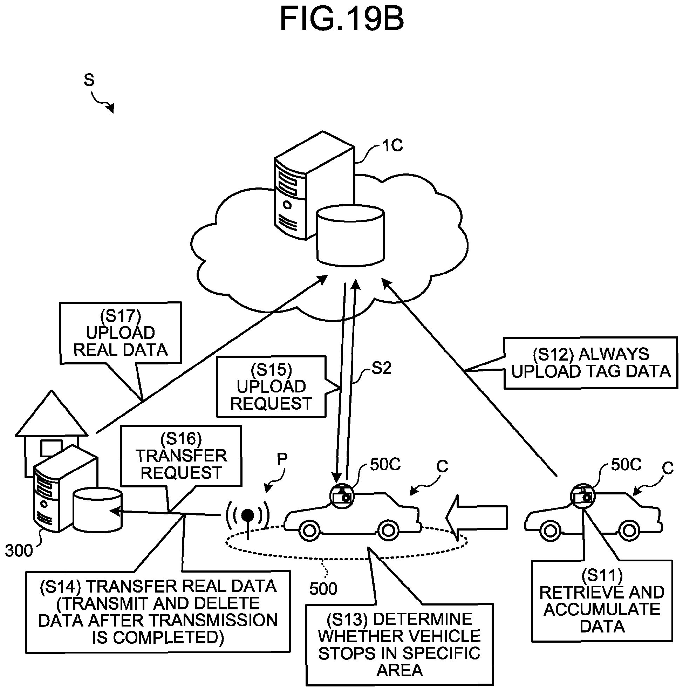

The following describes the data collection method according to a third embodiment. An outline of the data collection method according to the embodiment is described with reference to FIGS. 19A and 19B. FIGS. 19A and 19B are diagrams for explaining the outline of the data collection method according to the embodiment. FIGS. 19A and 19B illustrate the data collection system S to which the data collection method according to the embodiment is applied.

The configuration of the data collection system according to the third embodiment is the same as the configuration illustrated in FIG. 15A. The series of procedure performed until the vehicle data is provided to the data user is the same as the procedure illustrated in FIGS. 1A to 1C. The explanation of the configuration and the series of procedure is omitted in the present embodiment.

When a data collection apparatus 1C transmits no upload request in the system illustrated in FIG. 15A and FIGS. 1A to 1C, the vehicle data is not deleted from an on-vehicle device 50C. As a result, as illustrated in FIG. 19A, the storage capacity of the on-vehicle device 50C may possibly become MAX and "unable to accumulate data". In this case, when the data collection apparatus 1C transmits an upload request, the on-vehicle device 50C is unable to upload data because the vehicle data has an omission.

To address this, the data collection method according to the present embodiment determines whether the vehicle C stops in a specific area having a predetermined communication environment. If it is determined that the vehicle C stops in the specific area, the data collection method transfers the vehicle data accumulated in the on-vehicle device 50C to a data storage device via the communication environment.

As illustrated in FIG. 19B, in the data collection method according to the embodiment, the on-vehicle device 50C retrieves and accumulates the vehicle data based on the predetermined collection condition while the vehicle C is traveling, for example (Step S11). The on-vehicle device 50C always uploads the tag data T (Step S12). The on-vehicle device 50C can always upload the tag data T because the data amount of the tag data T is much smaller than that of the real data.

The on-vehicle device 50C determines whether the vehicle C stops in a specific area 500 (Step S13). The specific area 500 is an area like a Wi-Fi spot in which a predetermined communication environment, such as a public wireless LAN service, is available.

Specifically, the on-vehicle device 50C stores therein data on the specific area 500 in advance. The source data is created by the driver of the vehicle C using a PC or the like at the driver's home, for example, and transferred to the on-vehicle device 50C via communications or a storage medium. "Creating the source data using a PC or the like at the driver's home" means creating the source data by downloading and processing communication spot information provided by a data communication company, for example.

If the vehicle C stops in the corresponding area, the on-vehicle device 50C refers to the positional information on the specific area 500 included in the data on the specific area 500 and the information on the present position of the vehicle C detected by the GPS sensor, for example. The on-vehicle device 50C thus determines that the vehicle C stops in the specific area 500.

To determine whether the vehicle C stops at the position described above, the on-vehicle device 50C can use various methods, such as determining whether the state at vehicle speed of 0 has continued for a predetermined period of time or longer, whether the engine stops, whether the parking brake is turned on, or whether the ignition switch is turned off.

To determine whether the vehicle C is positioned in the specific area 500, the vehicle C in the specific area 500 tries to connect communications to a position in the specific area 500, and the on-vehicle device 50C makes determination on the connection state. If the vehicle C is connected to an access point P with a connection intensity of equal to or higher than a predetermined value, for example, the on-vehicle device 50C can determine that the vehicle C is positioned in the specific area 500. Needless to say, the on-vehicle device 50C may combine determination based on the connection state of communications, determination by referring to the positional information described above, and determination of whether the vehicle C stops.

With this method, if the on-vehicle device 50C determines that the vehicle C stops in the specific area 500, the on-vehicle device 50C transfers at least the real data R to a data storage device 300 via the access point P in the specific area 500 (Step S14).

The data storage device 300 is a home server provided at the home of the driver of the vehicle C and having a storage capacity larger than that of the on-vehicle device 50C, for example. "Transfer" herein means to transmit data to the data storage device 300 and delete the data from the on-vehicle device 50C after the transmission is completed.

Every time the vehicle C stops in the specific area 500, the on-vehicle device 50C can store the real data R having a higher capacity load out of the vehicle data in the data storage device 300 and delete the transmitted real data R from the on-vehicle device 50C. Consequently, the data collection method according to the embodiment can reduce the load on the storage capacity of the on-vehicle device 50C and prevent an omission in the accumulated vehicle data. In addition, the data collection method uses a communication environment, such as a public wireless LAN service. Consequently, the data collection method can reduce the communication load compared with a method using a mobile phone network, for example.

In the data collection method according to the embodiment, if the on-vehicle device 50C receives an upload request for the vehicle data stored in the data storage device 300 from the data collection apparatus 1C (Step S15), the on-vehicle device 50C transfers the request to the data storage device 300 (Step S16). The request is not necessarily transferred via the access point P.

Based on the transferred request, the on-vehicle device 50C uploads the real data R from the data storage device 300 to the data collection apparatus 1C (Step S17). As described above, the on-vehicle device 50C reliably receives the upload request from the data collection apparatus 1C. With this configuration, the data collection apparatus 1C can always integrate the request destination, and the on-vehicle device 50C can control determining whether to provide the vehicle data. In other words, the on-vehicle device 50C can manage transmitting and receiving data similarly to the case where it uploads the real data R to The data collection apparatus 1C.

From the perspective of management of transmitting and receiving data, a transfer history of the data transferred from the on-vehicle device 50C to the data storage device 300 is preferably accumulated in the on-vehicle device 50C. A transmission history of the data uploaded from the data storage device 300 to the data collection apparatus 1C is preferably accumulated in the data storage device 300.

From the perspective of the storage capacity of the data storage device 300, the real data R uploaded from the data storage device 300 to the data collection apparatus 1C is preferably deleted after the transmission is completed. The real data R is not necessarily deleted depending on the vacant state of the storage capacity of the data storage device 300.

As described above, the data collection method according to the embodiment determines whether the vehicle C stops in a specific area having a predetermined communication environment. If it is determined that the vehicle C stops in the specific area 500, the data collection method transfers the vehicle data accumulated in the on-vehicle device 50C to the data storage device 300 via the communication environment.

Consequently, the data collection method according to the embodiment can collect data with higher reliability and a lower communication load. The following describes a configuration example of the data collection system S according to the embodiment more specifically.

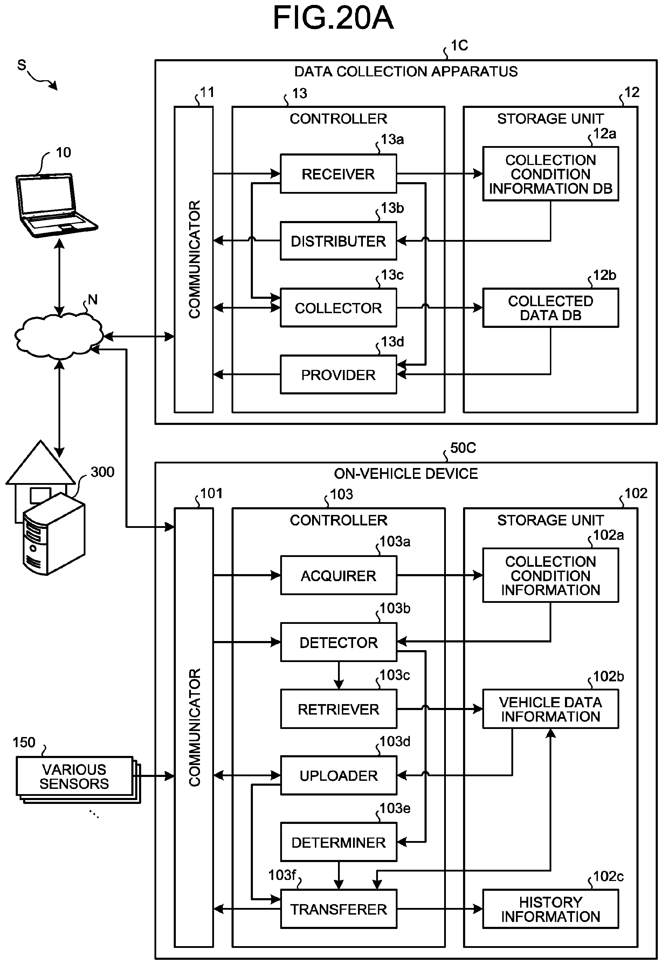

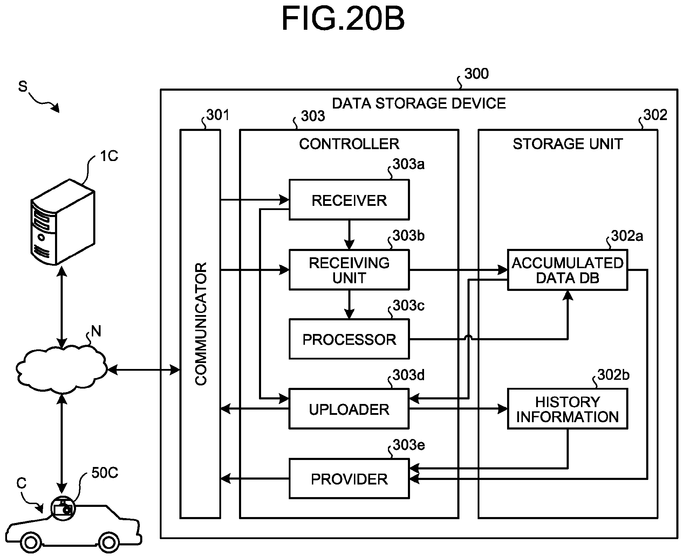

FIGS. 20A and 20B are block diagrams of a configuration example of the data collection system S according to the embodiment. FIGS. 20A and 20B illustrate only the components needed to explain the characteristics of the embodiment and does not illustrate typical components.

In the description with reference to FIGS. 20A and 20B, explanation of the components that have been already described may be simplified or omitted.

As illustrated in FIG. 20A, the data collection system S according to the embodiment includes the data collection apparatus 1C, the on-vehicle device 50C, the user terminal 10, and the data storage device 300.

The data collection apparatus 1C is described first. The data collection apparatus 1C includes the communicator 11, the storage unit 12, and the controller 13.

The communicator 11 is a NIC, for example. The communicator 11 is connected to the network N by wire or wirelessly and transmits and receives information to and from the on-vehicle device 50C, the user terminal 10, and the data storage device 300 via the network N.

The storage unit 12 is a semiconductor memory device, such as a RAM and a flash memory, or a storage device, such as a hard disk and an optical disc. In the example illustrated in FIG. 20A, the storage unit 12 stores therein a collection condition information DB 12a and a collected data DB 12b.

The collection condition information DB 12a accumulates therein the collection condition specified from the user terminal 10 and received by a receiver 13a, which will be described later. In other words, the collection condition information DB 12a includes previous records of the collection condition.

The collected data DB 12b accumulates the collected data collected by a collector 13c, which will be described later, from the on-vehicle device 50C. In other words, the collected data DB 12b includes previous records of the collected data. The collected data includes the tag data T and the real data R described above.

The controller 13 is a controller provided by a CPU or an MPU executing various computer programs stored in a storage device in the data collection apparatus 1C on a RAM serving as a work area, for example. The controller 13 can be provided as an integrated circuit, such as an ASIC and an FPGA.

The controller 13 includes the receiver 13a, a distributer 13b, the collector 13c, and a provider 13d. The controller 13 implements or performs the functions and effects of information processing described below.

The receiver 13a receives the collection condition specified by the data user from the user terminal 10 via the communicator 11 and stores them in the collection condition information DB 12a. The receiver 13a receives specification of the tag data T from the user terminal 10 and notifies the collector 13c of the specification. The receiver 13a also receives a browse or download request for the real data R from the user terminal 10, for example, and notifies the provider 13d of the request.

The distributer 13b distributes the collection condition stored and set in the collection condition information DB 12a to the vehicle C serving as the object vehicle via the communicator 11 in a file form, for example.

The collector 13c collects the tag data T uploaded from the on-vehicle device 50C and stores it in the collected data DB 12b. Based on the specification of the tag data T received from the receiver 13a, the collector 13c transmits an upload request for the real data R corresponding to the tag data T to the on-vehicle device 50C.

The collector 13c collects the real data R uploaded from the on-vehicle device 50C or the data storage device 300 based on the upload request via the communicator 11 and accumulates it in the collected data DB 12b.

The provider 13d extracts the corresponding vehicle data from the collected data DB 12b based on the browse request or the download request transmitted from the receiver 13a. The provider 13d edits the vehicle data for the UI screen as needed and provides the edited vehicle data to the user terminal 10.

The following describes the on-vehicle device 50C. The on-vehicle device 50C includes the communicator 101, the storage unit 102, and the controller 103. As described above, the on-vehicle device 50C is connected to the various sensors 150, such as a camera, an acceleration sensor, and a GPS sensor.

The communicator 101 is an NIC, for example. The communicator 101 is wirelessly connected to the network N and transmits and receives information to and from the data collection apparatus 1C via the network N. The communicator 101 receives output data from the various sensors 150.

The storage unit 102 is a semiconductor memory device, such as a RAM and a flash memory. In the example illustrated in FIG. 20A, the storage unit 102 stores therein the collection condition information 102a, the vehicle data information 102b, and history information 102c.

The collection condition information 102a includes the collection condition distributed from the data collection apparatus 1C. The vehicle data information 102b includes the vehicle data retrieved by the retriever 103c, which will be described later. The vehicle data includes the tag data T and the real data R described above.

The history information 102c includes a transfer history of the real data R transferred from the on-vehicle device 50C to the data storage device 300.

Similarly to the controller 13, the controller 103 is a controller provided by a CPU or an MPU executing various computer programs stored in a storage device in the on-vehicle device 50C on a RAM serving as a work area, for example. The controller 103 can be provided as an integrated circuit, such as an ASIC and an FPGA.

The controller 103 includes the acquirer 103a, the detector 103b, the retriever 103c, the uploader 103d, a determiner 103e, and a transferer 103f. The controller 103 implements or performs the functions and effects of information processing described below.

The acquirer 103a acquires the collection condition distributed from the data collection apparatus 1C and stores it in the collection condition information 102a. The detector 103b monitors the output data from the various sensors 150 and detects occurrence of an event serving as a trigger in the collection condition.

If the detector 103b detects occurrence of an event serving as a trigger to retrieve the vehicle data in the collection condition, for example, the detector 103b causes the retriever 103c to retrieve the vehicle data.

If the detector 103b detects occurrence of a trigger to retrieve the vehicle data, the retriever 103c retrieves the vehicle data based on the output data from the various sensors 150 and stores it in the vehicle data information 102b. If the detector 103b detects occurrence of a trigger to stop retrieving the vehicle data, the retriever 103c stops retrieving the vehicle data.

The uploader 103d always uploads the tag data T to the data collection apparatus 1C. If the uploader 103d receives an upload request for the real data R from the data collection apparatus 1C via the communicator 101, the uploader 103d notifies the transferer 103f of the request.

The determiner 103e determines whether the vehicle C stops in the specific area 500 based on the output data from the various sensors 150, for example. The determiner 103e notifies the transferer 103f of the determination result.

If the determiner 103e determines that the vehicle C stops in the specific area 500, the transferer 103f transmits the real data R accumulated in the vehicle data information 102b to the data storage device 300 via the access point P. The transferer 103f deletes the real data R transmitted to the data storage device 300 from the vehicle data information 102b after the transmission is completed.

If the transferer 103f is notified, by the uploader 103d, of an upload request for the real data R from the data collection apparatus 1C, the transferer 103f transfers the upload request to the data storage device 300 and causes the data storage device 300 to transmit the real data R to the data collection apparatus 1C.

The transferer 103f accumulates a transfer history of transferring the real data R to the data storage device 300 in the history information 102c. In addition, the transferer 103f causes the data storage device 300 to accumulate a transmission history of transferring the real data R from the data storage device 300 to the data collection apparatus 1C.

The following describes the data storage device 300. As illustrated in FIG. 20B, the data storage device 300 includes a communicator 301, a storage unit 302, and a controller 303.

The communicator 301 is a NIC, for example. The communicator 301 is connected to the network N by wire or wirelessly and transmits and receives information to and from the on-vehicle device 50C and the data collection apparatus 1C via the network N.

The storage unit 302 is a semiconductor memory device, such as a RAM and a flash memory, or a storage device, such as a hard disk and an optical disc. In the example illustrated in FIG. 20B, the storage unit 302 stores therein an accumulated data DB 302a and history information 302b.

The accumulated data DB 302a stores therein the real data R transferred from the on-vehicle device 50C. The history information 302b includes the transmission history of transmitting the real data R from the data storage device 300 to the data collection apparatus 1C.

The controller 303 is a controller provided by a CPU or an MPU executing various computer programs stored in a storage device in the data storage device 300 on a RAM serving as a work area, for example. The controller 303 can be provided as an integrated circuit, such as an ASIC and an FPGA.

The controller 303 includes a receiver 303a, a receiving unit 303b, a processor 303c, an uploader 303d, and a provider 303e. The controller 303 implements or performs the functions and effects of information processing described below.

The receiver 303a receives a transfer request for the real data R from the on-vehicle device 50C via the communicator 301 and notifies the receiving unit 303b of the request. The receiver 303a receives an upload request transmitted from the data collection apparatus 1C to the on-vehicle device 50C and transferred from the on-vehicle device 50C to the data storage device 300 and notifies the uploader 303d of the request.

Based on the transfer request transmitted from the receiver 303a, the receiving unit 303b receives the real data R transmitted from the on-vehicle device 50C via the communicator 301 and stores it in the accumulated data DB 302a.

The processor 303c processes the real data R to be stored in the accumulated data DB 302a when it is needed to process the real data R and stores the processed real data R in the accumulated data DB 302a. The processing includes analyzing, totalizing, and editing the real data R so as to facilitate the user's browsing when the user accesses the data storage device 300 from the on-vehicle device 50C or a smartphone and browses the stored data in the accumulated data DB 302a, for example.

Based on the upload request received from the receiver 303a, the uploader 303d extracts the corresponding real data R from the accumulated data DB 302a and transmits it to the data collection apparatus 1C. The uploader 303d accumulates the transmission history of transmitting the real data R to the data collection apparatus 1C in the history information 302b.

When receiving a browse request for the stored data in the accumulated data DB 302a or the history information 302b via the on-vehicle device 50C or a smartphone, for example, the provider 303e extracts the data corresponding to the request and provides it to the user on the UI screen or the like.

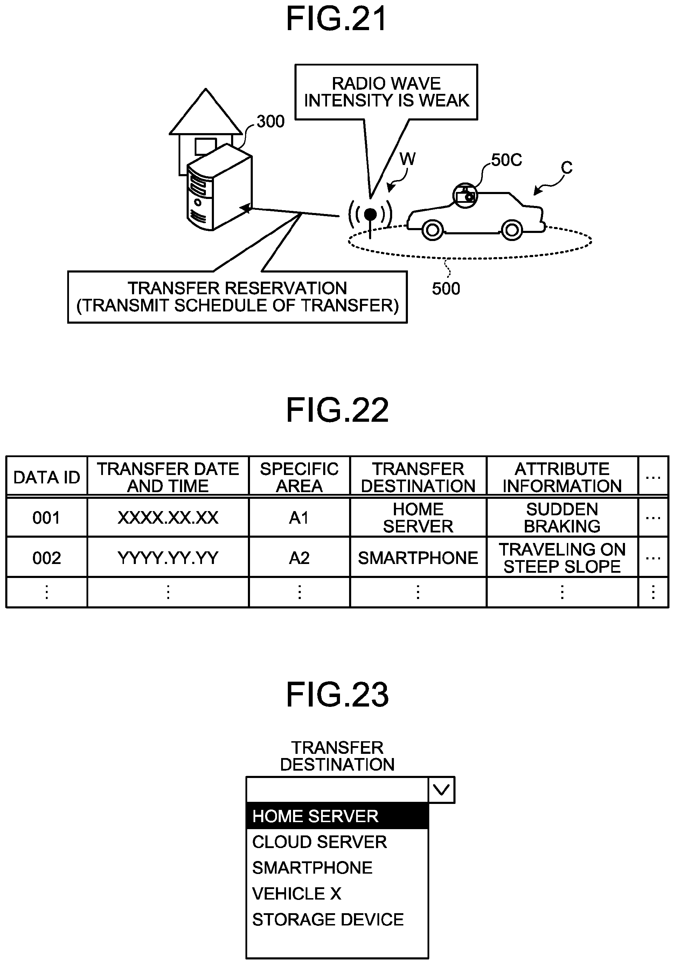

The following describes a case where the communication environment of the specific area 500 is unfavorable with reference to FIG. 21. FIG. 21 is a diagram of a modification where the communication environment of the specific area 500 is unfavorable.

As illustrated in FIG. 21, the vehicle C stops in the specific area 500, but the communication environment of the specific area 500 may possibly be unfavorable, like "weak radio wave intensity" of the access point P. If the determiner 103e of the on-vehicle device 50C can determine the state described above based on the output data from the various sensors 150, the transferer 103f simply makes a transfer reservation of notifying the data storage device 300 of a schedule of transferring the real data R.

If the data storage device 300 stores therein a history of the notification, the user can grasp that at least the communication environment is so unfavorable that the real data R failed to be transferred and that the real data R will be transferred immediately after the communication environment becomes favorable.

The following describes an example of the history information 102c on the on-vehicle device 50C with reference to FIG. 22. FIG. 22 is a diagram of an example of the history information 102c of the on-vehicle device 50C.

As illustrated in FIG. 22, the history information 102c includes a "data ID" item, a "transfer date and time" item, a "specific area" item, a "transfer destination" item, and a "attribute information" item, for example.

The "data ID" item stores therein identification information on the real data R transferred from the on-vehicle device 50C to the data storage device 300. The "transfer date and time" item stores therein the date and time of transfer. The "specific area" item stores therein the identification information on the specific area 500. The "transfer destination" item stores therein the identification information on the data storage device 300 serving as the transfer destination.

The data storage device 300 serving as the transfer destination can be selected optionally by the user from the on-vehicle device 50C, for example. FIG. 23 is a diagram of an example of selection of the transfer destination. As illustrated in FIG. 23, the UI screen of the on-vehicle device 50C, for example, displays the list of the pieces of identification information on the data storage device 300 serving as the transfer destination in a form of a drop-down list. With this configuration, the user can optionally select the transfer destination.

Examples of the transfer destination include, but are not limited to, a home server, a smartphone, a cloud server, another vehicle X owned by the user, a typical storage device, etc. The transfer destination may be selected in initial setting of the on-vehicle device 50C, before the vehicle C starts, or after the vehicle C stops in the specific area 500 and before the real data R starts to be transferred, for example.

Referring back to FIG. 22, the "attribute information" item stores therein the contents that may be called the attribute information on the tag data T, that is, the contents indicating that the data is acquired in "sudden braking" and "traveling on a steep slope", for example.

The items of the history information 102c is preferably recorded as text data having a smaller data amount. This configuration can prevent the history information 102c from imposing a load on the storage capacity of the on-vehicle device 50C.

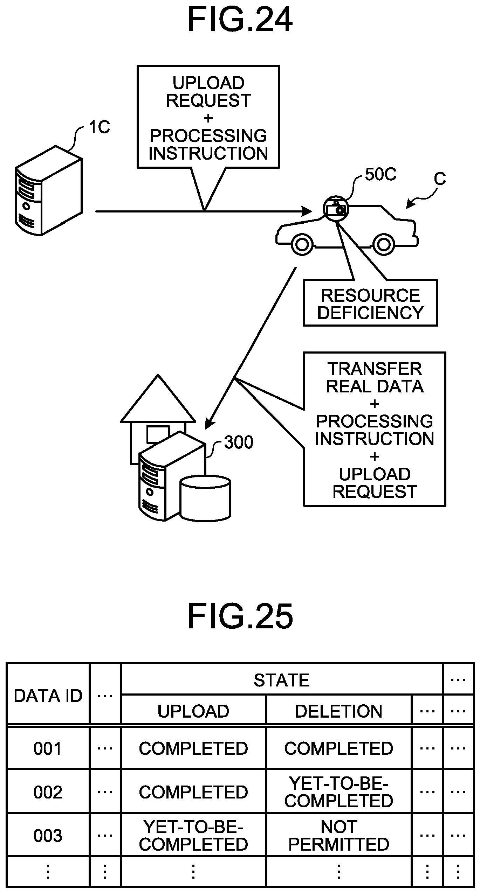

The following describes a case where a processing instruction is added to the upload request from the data collection apparatus 1C with reference to FIG. 24. FIG. 24 is a diagram of a modification where a processing instruction is added to the upload request.

As illustrated in FIG. 24, an instruction for processing the data may possibly be added to the upload request from the data collection apparatus 1C. If the corresponding real data R remains in the on-vehicle device 50C, but the on-vehicle device 50C fails to perform the processing corresponding to the processing instruction because of "resource deficiency", for example, the transferer 103f of the on-vehicle device 50C may transfer the processing instruction and the upload request together with the real data R and cause the processor 303c of the data storage device 300 to perform the processing.

Consequently, if the on-vehicle device 50C fails to perform the processing, the data storage device 300 can upload the real data R resulting from the processing based on the contents corresponding to the instruction from the data collection apparatus 1C.

If the on-vehicle device 50C can perform the processing, the on-vehicle device 50C may transfer the real data R resulting from the processing and the upload request to the data storage device 300. If the on-vehicle device 50C receives the upload request and the processing instruction for the real data R that has already been transferred to the data storage device 300, the on-vehicle device 50C simply transfers the upload request and the processing instruction to the data storage device 300 without any change.

The following describes an example of the history information 302b of the data storage device 300 with reference to FIG. 25. FIG. 25 is a diagram of an example of the history information 302b of the data storage device 300.

Similarly to the history information 102c of the on-vehicle device 50C, the history information 302b includes items, such as date and time, serving as the transmission history for each data ID, which are not illustrated. In addition, as illustrated in FIG. 25, the history information 302b may include an item indicating a "state" for each data ID, for example. In this example, the history information 302b includes the items indicating an "upload" state and a "deletion" state.

In other words, as illustrated in FIG. 25, the data storage device 300 may delete the real data R that has already been uploaded to the data collection apparatus 1C after the uploading (refer to the data ID "001" in FIG. 25). Furthermore, the data storage device 300 may prevent the real data R yet to be uploaded from being deleted (refer to the data ID "003" in FIG. 25).

If the storage capacity has a margin, for example, the data storage device 300 does not necessarily delete the real data R that has already been uploaded to the data collection apparatus 1C after the uploading (refer to the data ID "002" in FIG. 25). Furthermore, the priority can be set to the real data R based on the specification from the data collection apparatus 1C or the on-vehicle device 50C, for example. The data storage device 300 may determine whether to delete and the order of deleting the real data R based on the priority.

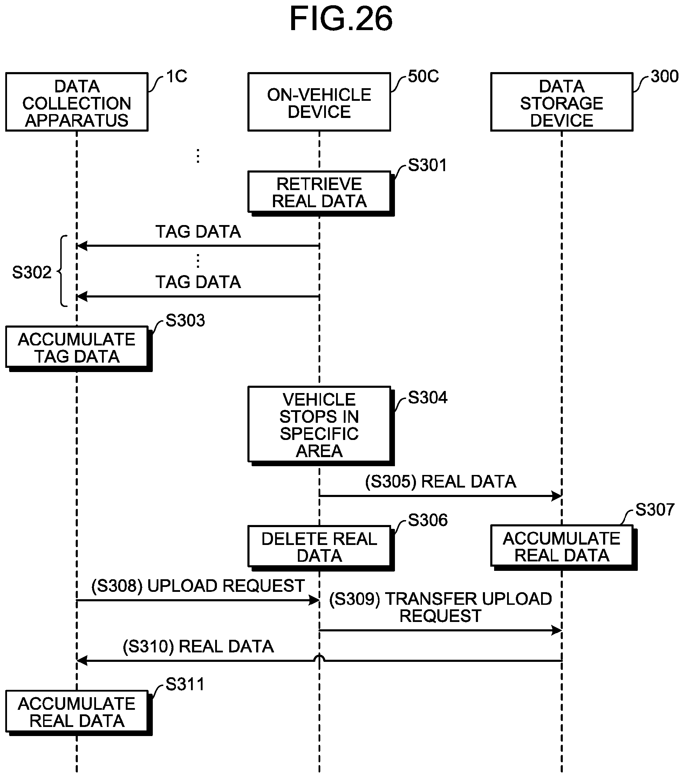

The following describes a processing sequence performed by the data collection system S according to the embodiment with reference to FIG. 26. FIG. 26 is a diagram of the processing sequence performed by the data collection system S according to the embodiment. The processing sequence illustrated in FIG. 26 is performed after the collection condition is distributed to the on-vehicle device 50C.

The on-vehicle device 50C retrieves the real data R based on the distributed collection condition (Step S301). Based on the real data R, the on-vehicle device 50C generates the tag data T and always transmits the tag data T to the data collection apparatus 1C (Step S302). The data collection apparatus 1C accumulates the tag data T (Step S303).

While repeating the processing from Step S301 to Step S303, the on-vehicle device 50C detects that the vehicle C stops in the specific area 500 (Step S304). The on-vehicle device 50C transmits the real data R to the data storage device 300 via the access point P in the specific area 500 (Step S305) and deletes the real data R after the transmission is completed (Step S306). The data storage device 300 accumulates the real data R transmitted from the on-vehicle device 50C (Step S307).

While repeating the processing from Step S301 to Step S307, the data collection apparatus 1C transmits an upload request for the real data R to the on-vehicle device 50C based on an instruction received from the user terminal 10, for example (Step S308).

The on-vehicle device 50C transfers the upload request to the data storage device 300 (Step S309). The data storage device 300 that has received the upload request extracts the real data R corresponding to the request and transmits it to the data collection apparatus 1C (Step S310). The data collection apparatus 1C accumulates the real data R (Step S311).

As described above, the on-vehicle device 50C according to the embodiment is mounted on the vehicle C. The on-vehicle device 50C retrieves and accumulates the real data R (corresponding to an example of "data on a vehicle") and transmits the real data R to the data collection apparatus 1C (corresponding to an example of a "host device") based on an upload request (corresponding to an example of a "transmission instruction") from the data collection apparatus 1C. The on-vehicle device 50C includes the determiner 103e and the transferer 103f. The determiner 103e determines whether the vehicle C is positioned in the specific area 500 having a predetermined communication environment. If the determiner 103e determines that the vehicle C is positioned in the specific area 500, the transferer 103f transfers the accumulated real data R to the data storage device 300 (corresponding to an example of an "external device") via the communication environment.

Consequently, the on-vehicle device 50C according to the embodiment can collect data with higher reliability and a lower communication load.

The transferer 103f transmits the accumulated real data R to the data storage device 300 and deletes the real data R after the transmission is completed.

The on-vehicle device 50C according to the embodiment can store the real data R having a higher capacity load in the data storage device 300 and delete the transmitted real data R from the on-vehicle device 50C. Consequently, the present embodiment can reduce the load on the storage capacity of the on-vehicle device 50C and prevent an omission in the accumulated vehicle data.

If the transferer 103f receives an upload request for the real data R transferred to the data storage device 300 from the data collection apparatus 1C, the transferer 103f transfers the upload request to the data storage device 300 and causes the data storage device 300 to transmit the real data R to the data collection apparatus 1C.

With the on-vehicle device 50C according to the embodiment, the data collection apparatus 1C can always integrate the request destination, and the on-vehicle device 50C can control determining whether to provide the vehicle data. In other words, the on-vehicle device 50C can manage transmitting and receiving data similarly to the case where it uploads the real data R to the data collection apparatus 1C.

The transferer 103f accumulates the transfer history of transferring the real data R to the data storage device 300 in the on-vehicle device 50C.

Consequently, the on-vehicle device 50C according to the embodiment can collectively manage the storage state, that is, which real data R is stored in each of the date storage devices 300.

The transferer 103f causes the data storage device 300 to accumulate the transmission history of transmitting the real data R from the data storage device 300 to the data collection apparatus 1C.

Consequently, the on-vehicle device 50C according to the embodiment can cause the data storage device 300 to collectively manage the storage state, that is, when and which real data R is uploaded from the data storage device 300 to the data collection apparatus 1C.

Let us assume a case where an instruction for processing the real data R is added to the upload request from the data collection apparatus 1C, but the on-vehicle device 50C fails to perform the processing corresponding to the processing instruction. In this case, the transferer 103f transfers the upload request and the processing instruction to the data storage device 300 and causes the data storage device 300 to process the real data R. The transferer 103f then causes the data storage device 300 to transmit the processed real data R to the data collection apparatus 1C.

Consequently, if the on-vehicle device 50C fails to perform the processing, the on-vehicle device 50C according to the embodiment can cause the data storage device 300 to upload the real data R resulting from the processing based on the contents corresponding to the instruction from the data collection apparatus 1C.

In the embodiment above, the on-vehicle device 50C transfers the real data R to the data storage device 300, and the data storage device 300 uploads the real data R to the data collection apparatus 1C, for example. Alternatively, the on-vehicle device 50C may upload the real data R to the data collection apparatus 1C.

The data collection apparatus 1C, for example, may request the on-vehicle device 50C to directly upload the real data R that is immediately needed. If the on-vehicle device 50C receives the request, the on-vehicle device 50C may upload the corresponding real data R to the data collection apparatus 1C regardless of whether the vehicle C is in the specific area 500. Needless to say, the corresponding real data R may be deleted from the on-vehicle device 50C after the transmission is completed.

While the data user according to the embodiment above is a developer of an autonomous driving technique, for example, this is simply an example of the user. The data user may be a corporate user, such as a service provider, or a general individual user.

### Fourth embodiment

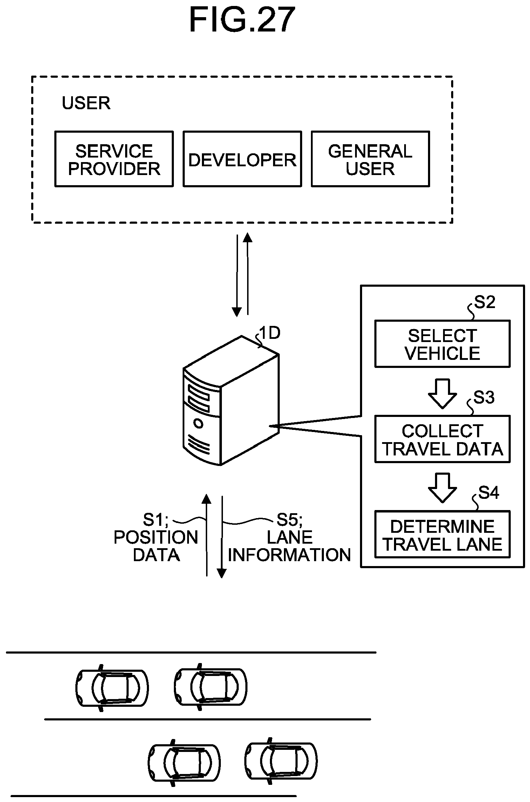

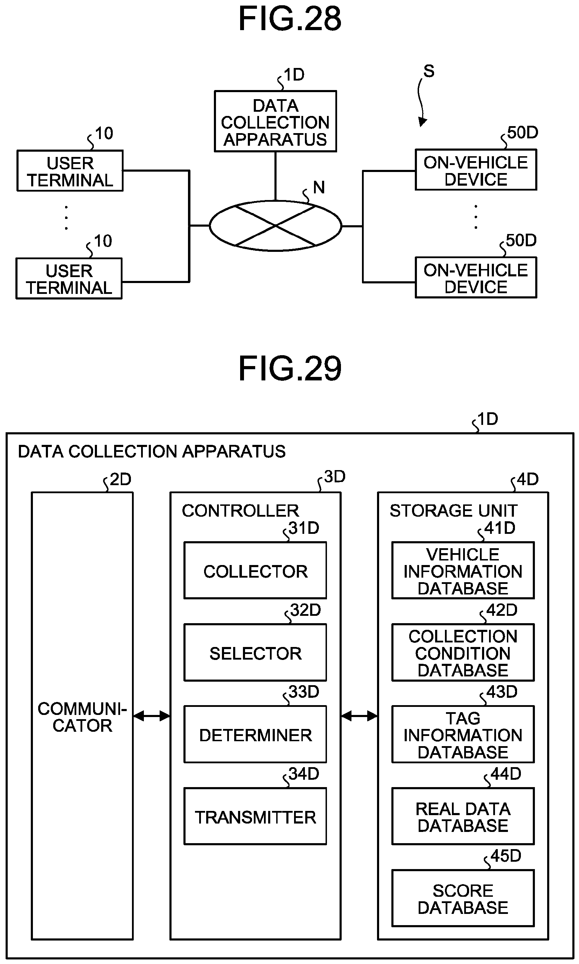

The following describes a fourth embodiment. FIG. 27 is a diagram of an outline of the data collection method. The data collection method is performed by data communications between a data collection apparatus 1D illustrated in FIG. 27 and on-vehicle device 50D (refer to FIG. 28 and other figures) mounted on the respective vehicles.

The data collection apparatus 1D is a server device that receives a collection request for data from data users, collects the data from the on-vehicle device 50D based on the received collection request, and provides the collected data to the users.

In the example illustrated in FIG. 27, the users are service providers, developers, and general users. In other words, the data collection apparatus 1D collects data desired by the users instead of the users and provides the collected data to them.

Specifically, the data collection apparatus 1D acquires position data on traveling positions from the respective vehicles (Step S1). Subsequently, the data collection apparatus 1D selects vehicles from which travel data is to be collected based on the position data (Step S2) .

If congestion due to vehicles has occurred or is predicted to occur, for example, the data collection apparatus 1D selects vehicles traveling toward the congestion point as the vehicles from which the travel data is to be collected. Subsequently, the data collection apparatus 1D collects the travel data from the vehicles selected at Step S2 (Step S3).

The data collection apparatus 1D can collect the travel data by specifying the data type, such as speed data indicating the travel speed of the vehicles. As a result, the data collection apparatus 1D can collect only the specified travel data. In other words, the data collection apparatus 1D collects only the specified data, thereby reducing the communication load. Furthermore, collecting only the specified data can prevent the data collection apparatus 1D from going down because of aggregation of a large amount of data at a time in the data collection apparatus 1D.

The data collection apparatus 1D analyses the collected travel data, thereby grasping the behaviors of the vehicles relating to the congestion in detail. The data collection apparatus 1D determines the travel lanes on which the respective vehicles should travel based on the collected travel data (Step S4).

The data collection apparatus 1D, for example, can determine the travel lanes on which the respective vehicles should travel such that the congestion is alleviated or prevented from occurring on the travel lanes. The data collection apparatus 1D notifies the vehicles of travel lane information on the travel lanes determined for the respective vehicles (Step S5).

The vehicles travel on the travel lanes determined by the data collection apparatus 1D, thereby alleviating the congestion. Determination of the travel lanes is effectively performed for a merging point where a main lane and a merging lane merging with the main lane intersect on an expressway, for example.

In this case, the data collection apparatus 1D collects the vehicle speed data on a vehicle traveling on the merging lane and a vehicle traveling on the main lane, thereby calculating the time when the vehicles arrive at the merging point.

If the times at which the respective vehicles are to arrive at the merging point match, the data collection apparatus 1D can instruct in advance the vehicle traveling on the main lane to travel on a passing lane. As a result, the vehicles can smoothly travel.

If congestion occurs near an exit of the expressway, the data collection apparatus 1D instructs the vehicles to change lanes from the lane near the exit to the lane away from the exit before arriving at the congestion point (with sufficient time). Consequently, the data collection apparatus 1D can prevent forcible lane changes from occurring frequently near the congestion range and prevent deterioration of the congestion due to unsmooth travel of the vehicles because of forcible lane changes.

As described above, the data collection apparatus 1D according to the embodiment limits the data to be collected to the data needed to alleviate or prevent congestion and then collects the data from the on-vehicle device 50D. Consequently, the data collection apparatus 1D can reduce the load on communications between the data collection apparatus 1D and the on-vehicle device 50D.

With this configuration, The data collection apparatus 1D can quickly collect the data. The data collection apparatus 1D determines the travel lanes using the collected data, thereby effectively using the quickly collected data.

The following describes the configuration of the data collection system according to the embodiment with reference FIG. 28. FIG. 28 is a diagram of a configuration example of the data collection system. As illustrated in FIG. 28, the data collection system S includes the data collection apparatus 1D, the user terminals 10, and the on-vehicle device 50D.

The data collection apparatus 1D, the user terminals 10, and the on-vehicle device 50D are connected via the network N. The data collection apparatus 1D collects data from the on-vehicle device 50D based on collection requests received from the user terminals 10 and provides the data to the user terminals 10.

The user terminal 10 is a terminal operated by the user and is a mobile phone such as a smartphone, a tablet terminal, a PDA, a desktop PC, or a notebook PC, for example. The user operates the user terminal 10, thereby transmitting the collection request to the data collection apparatus 1D. The user terminal 10 can display the data provided from the data collection apparatus 1D to the user. The on-vehicle device 50D can be used as the user terminal 10.

The on-vehicle device 50D are communication devices mounted on the respective vehicles. The on-vehicle device 50D stores travel data, travel information on the vehicle, and other data in an internal storage medium. The on-vehicle device 50D transmits the data to the data collection apparatus 1D based on a transmission request transmitted from the data collection apparatus 1D.

The following describes a configuration example of the data collection apparatus 1D according to the embodiment with reference to FIG. 29. FIG. 29 is a block diagram of the data collection apparatus 1D. As illustrated in FIG. 29, the data collection apparatus 1D includes a communicator 2D, a controller 3D, and a storage unit 4D.

The communicator 2D is a communication interface that transmits and receives information to and from the network N. The controller 3D can transmit and receive various kinds of information to and from the other components via the communicator 2D and the network N.

The controller 3D includes a collector 31D, a selector 32D, a determiner 33D, and a transmitter 34D. The controller 3D includes a computer and various circuits having a CPU, a ROM, a RAM, an HDD, and an input-output port, for example.

The CPU of the computer reads and executes a computer program stored in the ROM, for example, thereby functioning as the collector 31D, the selector 32D, the determiner 33D, and the transmitter 34D of the controller 3D.

At least part or all of the collector 31D, the selector 32D, the determiner 33D, and the transmitter 34D of the controller 3D may be provided as hardware, such as an ASIC and an FPGA.

The storage unit 4D corresponds to a RAM or an HDD, for example. The RAM or the HDD includes a vehicle information database 41D, a collection condition database 42D, a tag information database 43D, a real data database 44D, and a score database 45D. The data collection apparatus 1D may acquire the computer program and the various kinds of information described above via another computer or a portable recording medium connected by a wired or wireless network.

As illustrated in FIG. 8, for example, the vehicle information database 41D includes a vehicle information table relating to the vehicles. As illustrated in FIG. 9, for example, the collection condition database 42D includes a collection condition table relating to the collection conditions received from the user terminals 10.

The tag information database 43D stores therein the tag information transmitted from the on-vehicle device 50D. The tag information database 43D stores therein the tag information for each of the request IDs in a manner associated with information on time, tag information ID, and on-vehicle device ID, for example. The tag information database 43D is an example of the tag information storage unit.

The real data database 44D stores therein the real data collected from the on-vehicle device 50D based on the tag information. The information stored in the tag information database 43D and the real data database 44D is appropriately provided to the users by a transmitter 34D.

The score database 45D functions as a vehicle observance information storage unit that stores therein observance information indicating the states of whether the vehicles observe a lane travel instruction. The score database 45D includes a score table indicating the observance states of the vehicles by scores as the observance information. As described above, the present embodiment determines the travel lanes for the respective vehicles. All the vehicles, however, are not necessarily travel on the determined travel lanes. The data collection apparatus 1D manages whether the vehicles actually travel on the determined travel lanes by scores.

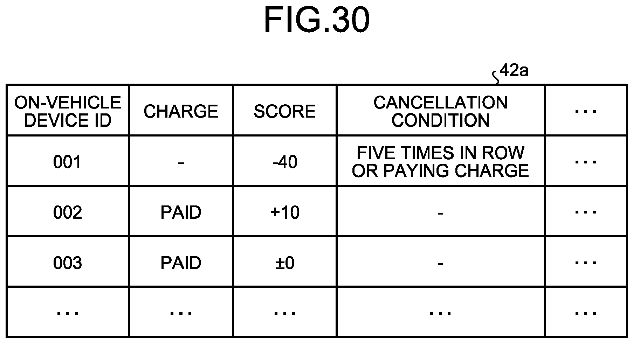

FIG. 30 is a diagram of an example of the score table. As illustrated in FIG. 30, a score table 45a is information having "on-vehicle device ID", "charge", "score", "cancellation condition", and other items in a manner associated with one another.

The on-vehicle device ID is an identifier for identifying the on-vehicle device 50D. The "charge" indicates whether the user pays a charge. The "score" indicates a score of the on-vehicle device 50D. The data collection apparatus 1D, for example, can determine the travel lane for the user who pays the charge preferentially to the user who does not pay the charge. Furthermore, the data collection apparatus 1D can determine the travel lane for the user having a higher score preferentially to the user having a lower score.

The data collection apparatus 1D can impose a penalty on the user having a lower score. The "cancellation condition" illustrated in FIG. 30 is a condition for cancelling the penalty. In the example illustrated in FIG. 30, the "cancellation condition" is five times in a row or paying a charge. Five times in a row indicates that the vehicle travels on the travel lane determined by the data collection apparatus 1D five times in a row.

Referring back to FIG. 29, the following describes the components of the controller 3D. The collector 31D of the controller 3D collects the position data and the travel data on the traveling position of the vehicles from the on-vehicle device 50D mounted on the respective vehicles.

The collector 31D, for example, can collect the position data on the traveling position of the vehicles. Subsequently, the collector 31D can collect the travel data from the on-vehicle device 50D of the vehicle selected by the selector 32D, which will be described later.

The collector 31D registers the collected position data in the tag information database 43D and registers the collected travel data in the real data database 44D. The position data is an example of the tag information.

The collector 31D may receive, from the user terminal 10, a collection request including a collection condition for data to be collected. If the collector 31D receives a collection condition, the collector 31D associates the request ID with the collection condition and registers the collection condition in the collection condition database 42D.

The selector 32D selects a vehicle that satisfies the collection condition. The selector 32D refers to the vehicle information database 41D to select a vehicle that satisfies the collection condition from the collection condition database 42D. If a vehicle satisfies a plurality of collection conditions, the collection conditions are applied to the vehicle.

The selector 32D generates a collection condition file indicating the collection conditions corresponding to the vehicles. If the collection condition database 42D is updated, the selector 32D may update the collection condition file. The selector 32D transmits the updated collection condition file to the transmitter 34D.

By setting at least the position data and the travel lane data as the collection conditions for determining the travel lanes for the respective vehicles and setting at least the position data as the tag information, the collector 31D can acquire the data needed to the travel lanes.

The selector 32D selects vehicles from which the travel data is to be collected based on the position data collected by the collector 31D. The selector 32D, for example, superimposes the data on the present positions of the respective vehicles on a map, thereby assuming the point where congestion has occurred or is predicted to occur.

Subsequently, the selector 32D selects vehicles relating to the assumed congestion as the vehicles from which the travel data is to be collected. The vehicles relating to congestion are vehicles traveling toward the point where the congestion has occurred or the point where the congestion is predicted to occur, for example.

If the selector 32D selects vehicles relating to congestion, the selector 32D transmits a transmission request for detailed travel data on the vehicle to the on-vehicle device 50D of the respective vehicles via the transmitter 34D. The transmission request includes information for specifying the data type, information on the period of data, and other information.

With this configuration, the collector 31D can collect the travel data from only the on-vehicle device 50D of the respective vehicles relating to congestion. Consequently, the data collection apparatus 1D can reduce the load on the network N and the data collection apparatus 1D compared with the case where it always collects the travel data from all the on-vehicle device 50D.

The selector 32D can select the vehicles considering information on the time of the position data besides the position data. In other words, the selector 32D assumes the travel routes of the vehicles from the latest position data on the respective vehicles and selects the vehicles from which the travel data is to be collected. If the latest position data is acquired a predetermined time or longer ago from the present time, for example, the selector 32D may assume the present position data from the position data.

The determiner 33D determines the travel lanes on which the respective vehicles should travel based on the travel data collected from the on-vehicle device 50D of the vehicles selected by the selector 32D. If the determiner 33D determines the travel lanes for the respective vehicles, the determiner 33D generates the lane information indicating the travel lanes on which the respective vehicles should travel and transmits the lane information to the on-vehicle device 50D via the transmitter 34D.

The determiner 33D can grasp the behaviors of the respective vehicles based on the travel data and determine the travel lanes on which the respective vehicles should travel such that congestion is alleviated or prevented from occurring on the travel lanes. The determiner 33D, for example, can instruct vehicles traveling on an expressway (in particular, expressway where congestion occurs) to change the travel lanes appropriately for the lanes on which they are traveling.

The determiner 33D can determine the travel lanes for specific preferential vehicles based on preferential conditions different from those for the other vehicles. The specific preferential vehicles include vehicles that pay the charge and vehicles having relatively higher scores. The preferential vehicles may include emergency vehicles, such as ambulances and police vehicles.

The determiner 33D can determine a travel lane with relatively less traffic and a travel lane dedicated to the preferential vehicles for the preferential vehicles. In other words, the determiner 33D determines the travel lanes for the preferential vehicles more preferentially than for the other vehicles. Consequently, the data collection system S can prompt the other vehicles to increase their scores and pay the charge.

The determiner 33D notifies the on-vehicle device 50D of the respective vehicles of the information on the travel lanes determined for the vehicles. Subsequently, the determiner 33D monitors which travel lanes the respective vehicles travel based on the travel data on the vehicles, calculates the scores of the respective vehicles, and updates the score database 45D. In other words, the determiner 33D monitors the observance states of the respective vehicles indicating whether they observe the instructions to travel the determined travel lanes and updates the score database 45D.

The determiner 33D may determine the travel lanes based on the performance of the vehicles. In other words, the determiner 33D can determine the travel lanes of the respective vehicles such that vehicles having similar performance travel on the same travel lane.

The performance described above includes the engine displacement and the vehicle model, for example. Examples of the vehicle model include, but are not limited to, sports car, sedan, wagon, minivan, etc. The determiner 33D can acquire the information on the performance from the vehicle information database 41D.

As described above, the determiner 33D determines the travel lanes for the respective vehicles based on the performance of the vehicles. As a result, the vehicles having similar performance travel on the same travel lane, thereby eliminating congestion on the travel lanes. The determiner 33D may determine the travel lanes for the respective vehicles based on driving tendencies of the drivers of the vehicles.

The transmitter 34D functions as a selection request transmitter and a transmission request transmitter. The transmitter 34D serves as the selection request transmitter by transmitting the collection condition file generated by the selector 32D to the on-vehicle device 50D.

The transmitter 34D also serves as the transmission request transmitter by transmitting a transmission request for detailed travel data from the on-vehicle device 50D of the respective vehicles selected by the selector 32D. As a result, the collector 31D collects the travel data from only the on-vehicle device 50D of the respective vehicles selected by the selector 32D.

The transmitter 34D transmits the collection condition file generated by the selector 32D for each of the vehicles and a synchronization command for the collection condition file to each of the on-vehicle device 50D.

After providing the tag information to the user, the transmitter 34D transmits a transmission request for the real data corresponding to the tag information specified by the user to the on-vehicle device 50D serving as the object. The configuration of the on-vehicle device 50D is not explain in detail because it is the same as that illustrated in FIG. 11.

When the acquirer 71D according to the present embodiment acquires the lane information from the data collection apparatus 1D, the acquirer 71D can notify the user of the lane information via a display unit, which is not illustrated. If the vehicle is an autonomous driving vehicle, the acquirer 71D can notify a control device that controls autonomous driving of the lane information.

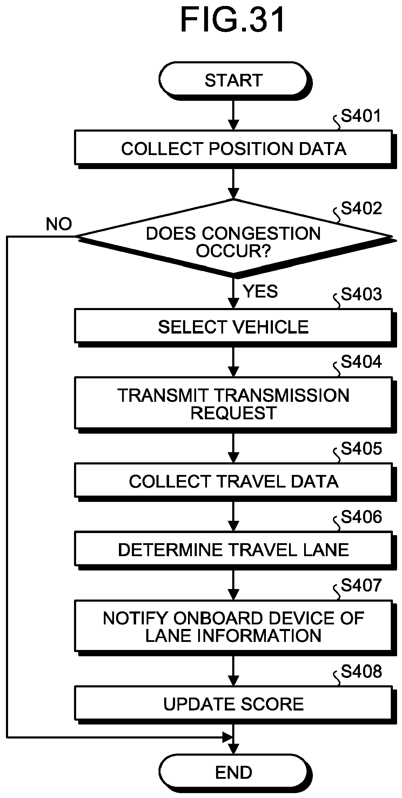

The following describes a procedure performed by the data collection apparatus 1D according to the embodiment with reference to FIG. 31. FIG. 31 is a flowchart of the procedure performed by the data collection apparatus ID according to the embodiment. This processing is repeatedly performed while the data collection apparatus 1D is operating.

As illustrated in FIG. 31, the data collection apparatus 1D collects the position data (Step S401) and determines whether congestion occurs (Step S402). If the data collection apparatus 1D determines that congestion occurs (Yes at Step S402), the data collection apparatus 1D selects vehicles relating to the congestion (Step S403).

Subsequently, the data collection apparatus 1D transmits a transmission request for the travel data to the on-vehicle device 50D of the respective vehicles selected at Step S403 (Step S404) and collects the travel data (Step S405) .

Subsequently, the data collection apparatus 1D determines the travel lanes for the respective vehicles based on the travel data (Step S406). The data collection apparatus 1D notifies the on-vehicle device 50D of the respective vehicles of the lane information on the travel lanes (Step S407).

Subsequently, the data collection apparatus 1D updates the scores based on whether the vehicles travel on the travel lanes specified by the notification (Step S408) and ends the processing. If the data collection apparatus 1D determines that no congestion occurs (No at Step S402), the data collection apparatus 1D ends the processing.

While the data collection apparatus 1D performs the processing at Step S403 and subsequent processing depending on the result of determination at Step S402, the data collection apparatus 1D may perform the processing at Step S403 without performing the determination at Step S402.

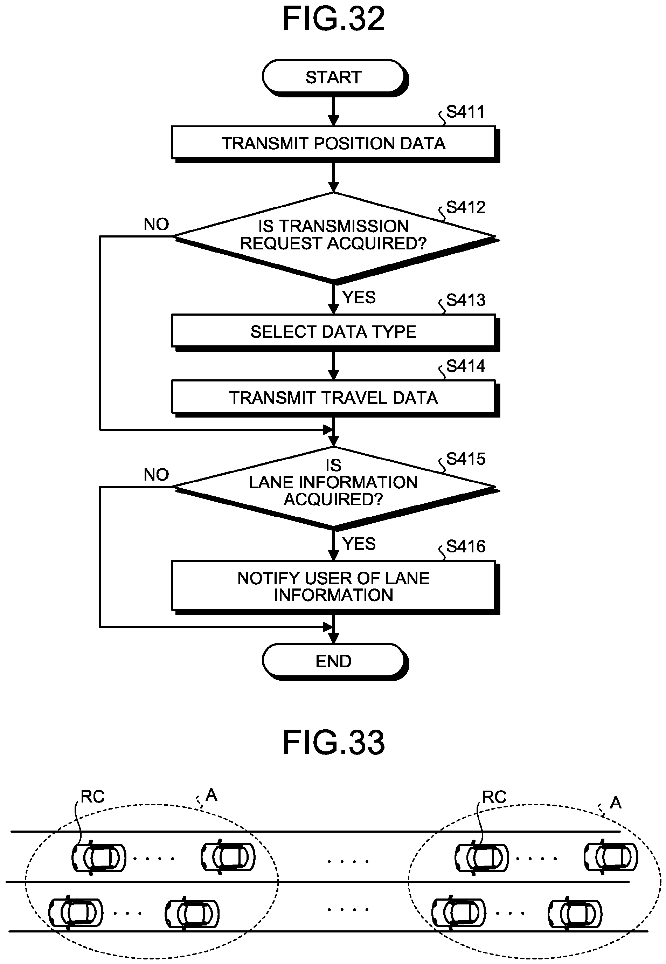

The following describes a procedure performed by the on-vehicle device 50D with reference to FIG. 32. FIG. 32 is a flowchart of the procedure performed by the on-vehicle device 50D. This processing is repeatedly performed while the on-vehicle device 50D is operating.

As illustrated in FIG. 32, the on-vehicle device 50D transmits the position data as the tag information (Step S411). The on-vehicle device 50D determines whether it has acquired a transmission request for the travel data (Step S412). If the on-vehicle device 50D has acquired a transmission request (Yes at Step S412), the on-vehicle device 50D selects the data type specified by the transmission request (Step S413).

Subsequently, the on-vehicle device 50D transmits the selected travel data (Step S414) and determines whether it has acquired the lane information (Step S415). If the on-vehicle device 50D has acquired the lane information (Yes at Step S415), the on-vehicle device 50D notifies the user of the lane information (Step S416) and ends the processing.

If the on-vehicle device 50D has acquired no transmission request at Step S412 (No at Step S412), the on-vehicle device 50D performs the processing at Step S415. If the on-vehicle device 50D has acquired no lane information (No at Step S415), the on-vehicle device 50D ends the processing.

As described above, the data collection apparatus 1D according to the embodiment includes the collector 31D, the selector 32D, and the determiner 33D. The collector 31D collects the travel data including the position data on the traveling position of the vehicles from the on-vehicle device 50D mounted on the respective vehicles. The selector 32D selects vehicles from which the travel data is to be collected by the collector 31D based on the position data collected by the collector 31D. The determiner 33D determines the travel lanes on which the vehicles should travel based on the travel data collected from the on-vehicle device 50D of the respective vehicles selected by the selector 32D. Consequently, the data collection apparatus 1D according to the embodiment can effectively use the collected data.

If congestion has occurred or is predicted to occur, the selector 32D in the data collection apparatus 1D according to the embodiment selects vehicles from which the travel data is to be collected based on the position data on the vehicles collected from the vehicles relating to the congestion.

The determiner 33D in the data collection apparatus 1D according to the embodiment determines the object on-vehicle device 50D for which the travel lanes are to be determined and determines the travel lanes for the vehicles provided with the object on-vehicle device 50D.

The data collection apparatus 1D according to the embodiment includes the score database 45D (vehicle observance information storage unit) that stores therein the observance information indicating the states of whether the vehicles observe the lane travel instruction based on determination of the travel lanes.

The determiner 33D in the data collection apparatus 1D according to the embodiment determines the travel lanes for specific preferential vehicles based on preferential conditions different from those for the other vehicles.

The determiner 33D in the data collection apparatus 1D according to the embodiment determines the travel lanes based on the performance of the vehicles.

The data collection apparatus 1D according to the embodiment includes the collector 31D and the transmitter 34D. a collector 31D, receives a collection request including a collection condition for object data to be collected. The transmitter 34D (an example of the transmission request transmitter) transmits a selection request for the data type specified by the collection condition to the on-vehicle device 50D mounted on the vehicle. The transmitter 34D (an example of the transmission request transmitter) transmits a transmission request for the data selected based on the selection request. The transmitter 34D transmits a tag information request serving as a transmission request for the tag information corresponding to the object data corresponding to the collection condition. The data collection apparatus 1D transmits the specified tag information specified based on the tag information transmitted from the on-vehicle device 50D based on the tag information request as the object data request to the on-vehicle device 50D that transmits the tag information. The data collection apparatus 1D collects the travel data by setting the position data and the travel lane data as the collection condition and setting the position data as the tag information.

The data collection system S according to the embodiment includes the data collection apparatus 1D and the on-vehicle device 50D.

While the data collection apparatus 1D according to the embodiment above determines the travel lanes for the respective vehicles, the embodiment is not limited thereto. If The data collection apparatus 1D determines the travel lanes for the respective vehicles, the processing load of The data collection apparatus 1D increases and may possibly go down.

To address this, the data collection apparatus 1D may cause the on-vehicle device 50D to determine the travel lanes. In other words, the data collection apparatus 1D may transfer the right to determine the travel lanes to the on-vehicle device 50D. FIG. 33 is a diagram of an example of transfer of the determination right. FIG. 33 does not illustrate the on-vehicle device 50D.

As illustrated in FIG. 33, the determiner 33D of the data collection apparatus 1D determines a leader vehicle RC in each predetermined range A, for example. The determiner 33D notifies the on-vehicle device 50D of the determined leader vehicle RC of the travel data on the vehicles traveling in the predetermined range A and transfers the determination right.

The on-vehicle device 50D of the leader vehicle RC determines the travel lanes for the respective vehicles based on the travel data. The on-vehicle device 50D of the leader vehicle RC can notify the on-vehicle device 50D of the respective vehicles in the predetermined range A of the travel lanes via the data collection apparatus 1D, for example. The on-vehicle device 50D of the leader vehicle RC may notify the on-vehicle device 50D of the lane information not via the data collection apparatus 1D but via vehicle-to-vehicle communications, for example.

In other words, the determiner 33D defines a plurality of vehicles as one group, determines the leader vehicle RC in the group, and causes the on-vehicle device 50D of the leader vehicle RC to determine the travel lanes for the respective vehicles included in the group.

This configuration can reduce the processing load of the data collection apparatus 1D compared with the case where the determiner 33D determines the travel lanes for all the vehicles.

While the data collection apparatuses 1 and 1A to 1D according to the embodiments above collect the data from the on-vehicle device 50 and 50A to 50D, respectively, the embodiments are not limited thereto. In other words, the data collection apparatuses 1 and 1A to 1D may collect the data from terminal devices, such as smartphones and tablet terminals.

The data collection apparatuses 1 and 1A to 1D and the on-vehicle device 50 and 50A to 50D may be appropriately combined.

## Claims

1. A data collection apparatus (1A) comprising:
a receiver (32A) that receives a user data collection request from a user terminal (10);
an instruction data transmitter (34A) that transmits a collection request based on the user data collection request to an on-vehicle device;
a collector (31A) that collects tag information of vehicle state data acquired by a vehicle from the on-vehicle device mounted on the vehicle; and
a provider (35A) that provides selection tag information for selecting data by a user to the user terminal based on the tag information collected by the collector (31A), wherein
the instruction data transmitter (34A) transmits a transmission instruction based on a user data transmission instruction received from the user terminal (10) to the on-vehicle device (50),
the collector (31A) collects the vehicle state data corresponding to the transmission instruction transmitted from the on-vehicle device (50), and
the provider (35A) provides user vehicle state data for using data by the user to the user terminal (50) based on the vehicle state data collected by the collector (31A).

2. The data collection apparatus (1A) according claim 1, wherein
the collection request includes vehicle selection information, and
the instruction data transmitter (34A) selects a vehicle capable of performing an operation of acquiring the vehicle state data.

3. The data collection apparatus (1A) according claim 2, wherein the provider (35A) generates assumed user vehicle state data conforming to the collection request based on previous vehicle state data and provides the assumed user vehicle state data when the vehicle state data corresponding to the collection request is not collected from the on-vehicle device (50).

4. The data collection apparatus (1A) according claim 3, wherein the provider (35A) calculates reliability of the assumed user vehicle state data and provides the assumed user vehicle state data in a manner associated with the reliability.

5. The data collection apparatus (1A) according any one of claims 1 to 4, wherein
the tag information includes positional information on the vehicle, and
the instruction data transmitter (34A) transmits, to the on-vehicle device (50), the transmission instruction for causing the on-vehicle device to transmit the vehicle state data acquired at a specific position based on the positional information on the vehicle.

6. The data collection apparatus (1A) according any one of claims 1 to 5, wherein the instruction data transmitter (34A) transmits, to the on-vehicle device, the transmission instruction for causing the on-vehicle device to transmit the vehicle state data on the vehicle specified by the user data transmission instruction.

7. The data collection apparatus (1A) according claim 6, wherein the collector (31A) collects the vehicle state data via the on-vehicle device of a peripheral vehicle near the specified vehicle when the collector (31A) fails to collect the vehicle state data from the specified vehicle.

8. A data collection system (S) comprising:
a data collection apparatus (1A), an on-vehicle device (50), and a user terminal (10), wherein
the user terminal (10) is capable of using data acquired by the on-vehicle device (50),
the data collection apparatus (1A) comprises:
a receiver (32A) that receives a user data collection request from the user terminal (10);
an instruction data transmitter (34A) that transmits a collection request based on the user data collection request to the on-vehicle device;
a collector (31A) that collects tag information of vehicle state data acquired by a vehicle from the on-vehicle device mounted on the vehicle; and
a provider (35A) that provides selection tag information for selecting data by a user to the user terminal based on the tag information collected by the collector (31A),
the instruction data transmitter (34A) transmits a transmission instruction based on a user data transmission instruction received from the user terminal (10) to the on-vehicle device (50),
the collector (31A) collects the vehicle state data corresponding to the transmission instruction transmitted from the on-vehicle device (50),
the provider (35A) provides user vehicle state data for using data by the user to the user terminal (50) based on the vehicle state data collected by the collector (31A),
the on-vehicle device (50) comprises:
an acquirer (71A) that acquires the collection request from the data collection apparatus (1);
a real data storage unit (82A) that stores therein the vehicle state data on the vehicle received from various vehicle state detecting units provided to the vehicle based on the collection request acquired by the acquirer (71A); and
a transmitter (74A) that transmits, to the data collection apparatus (1A), the tag information of the vehicle state data stored in the real data storage unit (82A) based on the collection request acquired by the acquirer (71A),
the transmitter (74A) extracts the vehicle state data corresponding to the transmission instruction from the real data storage unit (82A) and transmits the vehicle state data to the data collection apparatus (1) based on the transmission instruction from the data collection apparatus (1), and
the user terminal (10) receives the user data collection request from the user, transmits the user data collection request to the data collection apparatus (1A), provides selection tag information provided from the data collection apparatus (1A) to the user, receives the user data collection request from the user, transmits the user data collection request to the data collection apparatus (1A), and provides the user vehicle state data provided from the data collection apparatus (1A) to the user.

9. A data collection method comprising:
a reception step for receiving a user data collection request from a user terminal (10);
an instruction data transmission step for transmitting a collection request based on the user data collection request to an on-vehicle device (50);
a collection step for collecting tag information of vehicle state data acquired by a vehicle from the on-vehicle device (50) mounted on the vehicle; and
a provision step for providing selection tag information for selecting data by a user to the user terminal (10) based on the tag information collected at the collection step, wherein
the instruction data transmission step includes transmitting a transmission instruction based on a user data transmission instruction received from the user terminal to the on-vehicle device (50),
the collection step includes collecting the vehicle state data corresponding to the transmission instruction transmitted from the on-vehicle device (50), and
the provision step includes transmitting user vehicle state data for using data by the user to the user terminal (10) based on the vehicle state data collected at the collection step.

10. An on-vehicle device (50) comprising:
an acquirer (71A) that acquires a collection request from a data collection apparatus (1A);
a real data storage unit (82A) that stores therein a vehicle state data on a vehicle received from various vehicle state detecting units provided to the vehicle based on the collection request acquired by the acquirer (71A); and
a transmitter (74A) that transmits, to the data collection apparatus (1A), tag information of the vehicle state data stored in the real data storage unit (82A) based on the collection request acquired by the acquirer (71A), wherein
the transmitter (74A) extracts, based on a transmission instruction from the data collection apparatus (1A), the vehicle state data corresponding to the transmission instruction from the real data storage unit (82A) and transmits the vehicle state data to the data collection apparatus (1A).

11. The on-vehicle device (50) according to claim 10, wherein, when the transmitter (74A) fails to transmit the tag information or the vehicle state data to the data collection apparatus (1), the transmitter transmits and receives the data via another communication device.
